# EUROPEAN PATENT APPLICATION

(11) **EP 4 783 716 A1**
(43) Date of publication of application: **29.07.2026**
(21) Application number: 23952733.6
(22) Date of filing: 22.09.2023
(51) Int. Cl.: H04W 74/08, H04W 48/08

(54) **WIRELESS COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: ZHOU, Liang, Dongguan, Guangdong 523860 (CN); LU, Liuming, Dongguan, Guangdong 523860 (CN); YAN, Li, Dongguan, Guangdong 523860 (CN); ZHANG, Jun, Dongguan, Guangdong 523860 (CN); LUO, Chaoming, Dongguan, Guangdong 523860 (CN); HUANG, Weidong, Dongguan, Guangdong 523860 (CN); XIANG, Yun, Dongguan, Guangdong 523860 (CN); WANG, Junkai, Dongguan, Guangdong 523860 (CN); YIN, Baolin, Dongguan, Guangdong 523860 (CN)
(74) Representative: Taor, Simon Edward William
(86) International application number: PCT/CN2023/120799
(87) International publication number: WO 2025/060081

(57) **Abstract**

Provided are a wireless communication method and a communication apparatus. The method comprises: an access point multi-link device (AP MLD) uses a first link to manage a second link, wherein a frequency band corresponding to the first link is lower than a frequency band corresponding to the second link. In the embodiments of the present application, the first link may be used to manage the second link thus improving the reliability of managing the second link.

## Description

### TECHNICAL FIELD

The present application relates to the technical field of communication, and in particular to a method for radio communication and a communication device.

### BACKGROUND

At present, multi-link devices can use multiple links to communicate in parallel, which significantly improves the transmission rate. However, for a multi-link device, multiple links communicating together will inevitably increase power consumption. Therefore, in order to save power consumption, the multi-link device can temporarily deactivate some links when the traffic volume is low to achieve the purpose of energy saving. When the traffic volume increases temporarily, all links can be activated to ensure that the traffic can be transmitted in time, thus helping to balance the energy consumption and transmission capacity of multi-link device. However, how to manage multiple links is an urgent problem to be solved.

### SUMMARY

The present application provides a method for radio communication and a communication device. Various aspects of the present application are described below.

According to a first aspect, there is provided a method for radio communication, which includes: an access point multi-link device (AP MLD) manages second link(s) by using first link(s). The frequency band corresponding to the first link(s) is lower than the frequency band corresponding to the second link(s).

In a second aspect, there is provided a method for radio communication, which includes: a first non-AP multi-link device (non-AP MLD) manages second link(s) by using first link(s). The frequency band corresponding to the first link(s) is lower than the frequency band corresponding to the second link(s).

According to a third aspect, there is provided a communication apparatus, which is an access point multi-link device (AP MLD). The communication apparatus includes a processing unit, which is configured to manage second link(s) by using first link(s). The frequency band corresponding to the first link(s) is lower than the frequency band corresponding to the second link(s).

According to a fourth aspect, there is provided a communication apparatus, which is a first non-access point multi-link device (non-AP MLD). The communication apparatus includes a processing unit, which is configured to manage second link(s) by using first link(s). The frequency band corresponding to the first link(s) is lower than the frequency band corresponding to the second link(s).

According to a fifth aspect, there is provided a communication device, which includes a processor and a memory. The memory is configured to store one or more computer programs and the processor is configured to invoke and execute the computer program(s) stored in the memory to perform some or all steps of the method of any aspects described above.

According to a sixth aspect, an embodiment of the present application provides a communication system, which includes the above described communication device. In another possible design, the communication system may further include other devices that interact with the communication device in the methods provided by the embodiments of the present application.

According to a seventh aspect, a computer-readable storage medium provided by an embodiment of the present application is configured to store a computer program. The computer program causes a communication device to perform some or all of the steps of the methods of the above aspects.

According to an eighth aspect, an embodiment of the present application provides a computer program product. The computer program product includes a non-transitory computer-readable storage medium storing a computer program operable to cause a communication device to perform some or all of the steps of the methods of the above aspects. In some implementations, the computer program product may be a software installation package.

According to a ninth aspect, an embodiment of the present application provides a chip including a memory and a processor, and the processor can invoke and run a computer program from the memory to implement some or all of the steps described in the methods of the above aspects.

In the embodiments of the present application, the first link(s) may be used to manage the second link(s), which is helpful to improve the reliability of managing the second link(s).

### BRIEF DESCRIPTION OF THE DRAWINGS

Fig. 1 is a schematic diagram of a radio communication system applicable to an embodiment of the present application.
Fig. 2 is a schematic flow chart of a method for radio communication according to an embodiment of the present application.
FIG. 3 is a schematic diagram of a frame structure of the first frame or the response frame of the first frame of an embodiment of the present application.
FIG. 4 is a schematic diagram of a frame structure of data frame applicable to the first frame of an embodiment of the present application.
FIG. 5 is a schematic diagram of a frame structure of a power saving-poll (PS-POLL) frame applicable to the first frame in the embodiment of the present application.
FIG. 6 is a schematic diagram of a frame structure of a link request applicable to the second frame in the embodiment of the present application.
FIG. 7 is a schematic diagram of a frame structure of a data frame applicable to the second frame in an embodiment of the present application.
FIG. 8 is a schematic diagram of a frame structure of a beacon frame applicable to the second frame in the embodiment of the present application.
FIG. 9 is a schematic diagram of a frame structure of a data frame applicable to the second frame in another embodiment of the present application.
FIG. 10 is a schematic diagram of a second link access method assisted by the first link in an embodiment of the present application.
Fig. 11 is a schematic flow chart of interaction of capability information in the embodiment of the present application.
Fig. 12 is a schematic flow chart of interaction of capability information in another embodiment of the present application.
FIG. 13 is a schematic diagram of a frame structure of a frame used for transmitting capability information in an embodiment of the present application.
FIG. 14 is a flowchart of a method of managing the second link(s) based on a trigger manner 1 in an embodiment of the present application.
FIG. 15 is a flowchart of a method of managing the second link(s) based on a trigger manner 2 in an embodiment of the present application.
FIG. 16 is a flowchart of a method of managing the second link(s) based on a trigger manner1 in another embodiment of the present application.
FIG. 17 is a flowchart of a method of managing the second link(s) based on a trigger manner 2 in another embodiment of the present application.
Fig. 18 is a schematic diagram of a communication apparatus according to an embodiment of the present application.
Fig. 19 is a schematic structure diagram of a communication apparatus according to another embodiment of the present application.
Fig. 20 is a schematic structure diagram of a communication device according to an embodiment of the present application.

### DETAILED DESCRIPTION

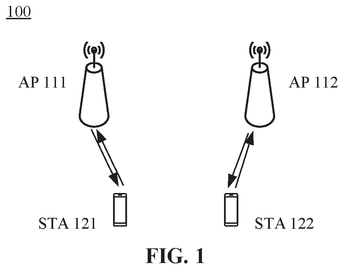

Hereinafter, technical solutions in the present application will be described with reference to the accompanying drawings. In order to facilitate understanding, a communication system applicable to the embodiment of the present application will be described below with reference to FIG. 1.

The technical solutions of the embodiments of the present application can be applied to various communication systems, such as wireless local area networks (WLAN), wireless fidelity (WiFi), high performance radio local area networks (HIPELAN), wide area networks (WAN), cellular networks or other communication systems, etc. As another example, the technical solution provided by the embodiment of the present application can be applied to a communication system adopting the 802.11 standard. For example, the 802.11 standard includes, but is not limited to, the 802.11 ax standard, the 802.11 be standard, the next generation 802.11 standard, and the like.

Fig. 1 is a schematic diagram of a radio communication system applicable to an embodiment of the present application. Referring to FIG. 1, a communication device in the communication system 100 may include an access point (AP) 111, an AP 112, a station (STA) 121 and a STA 122. The STA 121 may access the network through the AP 111. The STA 122 may access the network through the AP 112.

In some implementations, a STA may establish an association relationship with one or more APs, after which communication may be performed between the STA and AP having the association relationship. Referring to FIG. 1, communication mat be performed between the AP 111 and the STA 121 after the association relationship is established between the AP 111 and the STA 121, and communication mat be performed between the AP 112 and the STA 122 after the association relationship is established between the AP 112 and the STA 122.

In some implementations, the communication in the communication system 100 may be a communication between an AP and a non-AP STA, a communication between a non-AP STA and a non-AP STA, or a communication between an STA and a peer STA. The peer STA may refer to a device that communicates with the STA on the opposite end, for example, the peer STA may be an AP or a non-AP STA.

It should be understood that FIG. 1 exemplarily illustrates two AP STAs and two non-AP STAs. The communication system 100 may also include a larger number of AP STAs, or the communication system 100 may include other numbers of non-AP STAs, which are not limited by the embodiments of the present application.

Further, the above communication system can be applied to a scenario of multi-device cooperation, such as multiple access points (Multi-AP) cooperation, or multiple STAs cooperation.

In the embodiments of the present application, the names of AP and/or STA are not limited. In some scenarios, the AP may also be referred to as an AP STA, that is, in a sense, the AP is also a STA. In other scenarios, the STA may also be referred to as a non-AP STA.

In an embodiment of the present application, the AP may be a device in a radio network. The AP may be a communication entity such as a communication server, a router, a switch, or a network bridge, or the AP device may include various forms of macro base stations, micro base stations, relay stations, etc. Of course, the AP may also be a chip or circuit or processing system in these various forms of devices, thereby realizing the methods and functions of the embodiments of the present application. AP devices can be applied to a variety of scenarios, such as sensor nodes in smart cities (such as smart water meters, smart electricity meters, smart air detection nodes), smart devices in smart homes (such as smart cameras, projectors, displays, TV, stereo, refrigerators, washing machines, etc.), nodes in the Internet of Things, entertainment terminals (such as wearable devices such as AR and VR), smart devices in smart offices (such as printers, projectors, etc.), Internet of Vehicles devices in the Internet of Vehicles, some infrastructure in daily life scenarios (such as vending machines, self-service navigation desks in supermarkets, self-service cash register equipment, self-service ordering machines), etc.

In some implementations, the role of the STA in the communication system is not absolute, and in some scenarios, the STA may act as an AP. For example, in the scenario where a mobile phone connects to a router, the mobile phone may be a non-AP STA, while in the case where the mobile phone serves as a hotspot for other mobile phones, the mobile phone acts as an AP.

In the embodiment of the present application, the STA device in the embodiment of the present application may be a device having a radio transceiver function, for example, it may support an 802.11 series protocol, and may communicate with an AP or other STAs, for example, the STA is any user communication device that allows a user to communicate with the AP and then communicate with a WLAN. The STA device, for example, may be a User Equipment (UE), a mobile station (MS), a mobile terminal (MT), an access terminal, a subscriber unit, a subscriber station, a mobile station, a mobile terminal, a remote station, a remote terminal, a mobile device, a user terminal, a terminal, a radio communication device, a user agent, or a user device.

The STA in the embodiment of the present application may also be a device that provides voice/data connectivity to a user, for example, a handheld device having a wireless connection function, an in-vehicle device, or the like. For example, a mobile phone, a tablet, a laptop, a handheld computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, a cellular phone, a cordless phone, a session initiation protocol (SIP) phone, a wireless local loop (WLL) station, a personal digital assistant (PDA), a handheld device with wireless communication functionality, a computing device or other processing device connected to a wireless modem, a in-vehicle device, a wearable device, a terminal device in a 5G network or a terminal device in a future evolved public land mobile communication network (PLMN), etc., which are not limited in the embodiment of the present application.

By way of example but not limitation, in embodiments of the present application, the STA device may also be a wearable device. Wearable devices can also be called wearable smart devices, which are a general term for wearable devices developed by applying wearable technology to intelligently design daily wear, such as glasses, gloves, watches, clothing and shoes. For example: smart watches or smart glasses, etc., and only focus on a certain type of application function and need to be used in conjunction with other devices such as smart phones, such as various smart bracelets and smart jewelry for physical sign monitoring.

In addition, in the embodiment of the present application, the STA device may also be a terminal device in an internet of things (IoT) system, which is an important part of the future development of information technology, and its main technical feature is that things are connected to the network through communication technology, thereby realizing an intelligent network of man-machine interconnection and things interconnection. In the embodiment of the present application, for example, the IoT technology can achieve massive connection, deep coverage, and terminal power saving through narrow band (NB) technology.

In addition, in the embodiment of the present application, the STA device may be a device in the Internet of Vehicles system. The communication methods in the Internet of Vehicles system are collectively referred to as V2X (X stands for anything). For example, the V2X communication includes vehicle-to-vehicle (V2V) communication, vehicle-to-roadside infrastructure (V2I) communication, vehicle-to-pedestrian (V2P) communication, vehicle-to-network (V2N) communication, and the like.

In addition, in the embodiment of the present application, the STA device may also include sensors such as a smart printer, a train detector, and a gas station, and the main functions include collecting data (some terminal devices), receiving control information and downlink data of the AP device, and transmitting electromagnetic waves to transmit data to the AP device.

In addition, the AP device in the embodiment of the present application may be a device for communicating with an STA device, the AP device may be a network device in a wireless local area network, and the AP device may be used for communicating with the STA device through the wireless local area network.

From the perspective of the communication standard supported by the AP, in some implementations, the AP may be a device supporting the 802.11 be standard. The AP may be a device supporting various current and future 802.11 family WLAN standards such as 802.11ax, 802.11ac, 802.11n, 802.11g, 802.11b, and 802.11a.

From the perspective of the communication standard supported by the STA, in some implementations, the non-AP STA may support the 802.11be standard. The non-AP STA may support various current and future wireless local area networks (WLAN) standards of the 802.11 family, such as 802.11ax, 802.11ac, 802.11n, 802.11g, 802.11b, and 802.11a.

In the embodiment of the present application, there is no limitation on the frequency band that can be supported by the WLAN technology. In some implementations, the frequency bands that WLAN technology can support may include, but are not limited to, low frequency bands (e.g., 2.4 GHz, 5 GHz, 6 GHz), high frequency bands (e.g., 45 GHz, 60 GHz).

It should be understood that the specific forms of the STA device and the AP device are not particularly limited in the embodiments of the present application, and are merely exemplary descriptions herein.

### Carrier Sense Multiple Access with Collision Avoidance

In some communication systems (such as IEEE 802.11 based WLAN systems), the basic access mechanism of medium access control (MAC) is carrier sense multiple access with collision avoid (CSMA/CA). In some protocols, the CSMA/CA mechanism is also referred to as the distributed coordinate function (DCF) of IEEE802.11MAC, and basically employs a "listen before talk" access mechanism. In this type of access mechanism, the AP and/or STA senses a radio channel or medium before starting to transmit a signal. As a result of the sensing, if it is determined that the medium is in an idle state, a frame is transmitted by using the medium. Otherwise, if it is sensed that the medium is in an occupied state (or busy state), the AP and/or the STA will not initiate transmission, but instead sets the delay duration of the medium access and continues to wait.

In addition to directly listening for media physical carrier sensing by the AP and/or STA, the CSMA/CA mechanism also includes virtual carrier sensing, which is designed to compensate for problems that may occur in media access (such as hidden node issues). For virtual carrier sensing, the MAC of the WLAN system uses a network allocation vector (NAV). The NAV is a value transmitted to another AP or another STA by an AP and/or STA currently using the medium or authorized to use the medium. This value indicates the remaining time until the medium returns to the available state. Therefore, it is set that the value of NAV corresponds to a period reserved for the AP and/or STA transmitting the corresponding frame to use the medium.

### Power saving (PS) mode

At present, considering that most STAs using radio networks are mobile devices, and mobile devices mainly rely on batteries to provide power, and the power that can be provided by batteries is very limited. Therefore, the PS mode is introduced in order to improve the utilization rate of the electric power of the STA. Therefore, the main purpose of PS mode is to reduce the power consumption of Wi-Fi devices. Typically, a STA in PS mode may be in a sleep state (e.g., its signal transmitting power amplifier is turned off), and the AP may buffer downlink data to be transmitted to the STA as a staging frame, so as to avoid the STA being in a wake-up state all the time, resulting in rapid power consumption of the STA.

At present, the communication procedure in the PS mode may include: firstly, the STA may notify the AP that it will enter the PS mode, and in this case, the AP starts buffering the data packets of the STA. Thereafter, the AP may periodically transmit a Beacon frame containing a traffic indication map (TIM) field, which is used for informing the STA whether there is data buffered for it. Accordingly, upon elapsing of each listening interval, the STA wakes up to receive a beacon frame, and if the TIM in the beacon frame indicates that there is data buffered for it, the STA may send a PS-POLL frame to the AP. Accordingly, the AP immediately replies with ACK after successfully receiving the PS-POLL frame, and transmits the buffered downlink data to the STA.

In some implementations, a PS-POLL frame may correspond to a scratch frame, that is, a PS-POLL frame may trigger an AP to send a scratch frame to transmit downlink data. Thereafter, the STA may continue to transmit the PS-POLL frame until all the scratch frames are transmitted to the STA.

In an embodiment of the present application, for a multi-link device in the PS mode, one or more links corresponding to the device may be in a sleep state. For example, the link corresponding to the non-AP STA may include the link 1 and the link 2, and if the non-AP STA is in the PS mode, the link 2 may be in a sleep state, or both the link 1 and the link 2 may be in a sleep state. Among them, link 1 may be, for example, the first link described below, and link 2 may be, for example, the second link described below.

### Multi-link scenario

In some scenarios, the communication system 100 shown in FIG. 1 may be applied to a multi-link scenario, that is, some communication devices in the communication system may communicate over multiple links. Accordingly, the communication device may also be referred to as "multi-link device (MLD)." Sometimes it also referred to as a multi-link entity or a multi-band entity. Generally, if the multi-link device is an AP, the AP may also be referred to as a "multi-link AP", or an AP MLD. If the multi-link device is a STA, the STA may also be referred to as a "multi-link STA" or a non-AP MLD.

In some implementations, the multiple communication links may include communication links of different frequency bands, and thus, the above multi-link communication may also be referred to as multi-band communication. In some implementations, the frequency bands in which the multiple communication links are located may include a millimeter wave frequency band and/or a low frequency band. The frequency range corresponding to the millimeter wave frequency band may include 30 to 300 GHz. For example, the millimeter wave frequency band may be a 60 GHz frequency band. The frequency range corresponding to the low frequency band (also known as the Sub-7GHz frequency band) may include 450MHz-6GHz. For example, the low frequency band may be 2.4 GHz. For another example, the low frequency band may be 5 GHz. For another example, the low frequency band may be 6 GHz. In other implementations, multiple communication links may occupy multiple channels. The plurality of channels may be located in different or same frequency bands. Adopting multi-link communication helps to improve communication throughput and/or reliability between devices.

Compared with devices that only support single link transmission, the link identification can be used to identify one link or station(s) on one link when the AP MLD performs communication with the non-AP MLD. In some embodiments, prior to communication, the AP MLD and the non-AP MLD may first negotiate or communicate the correspondence between the link identification and one link or station(s) on one link.

In an embodiment of the present application, the multi-link device may be a multi-link device with a single antenna (or a single radio frequency module or single radio frequency), or may be a multi-link device with multiple antennas (or multiple radio frequency modules or multi-radio frequency). In some embodiments, a multi-link device with a single antenna may mean that the multi-link device has only one physical STA. This one physical STA supports communication in multiple frequency bands. In some embodiments, a multi-link device with multiple antennas may mean that the multi-link device has a plurality of physical STAs. For each physical STA, it supports communication in one or more frequency bands.

If the spacing between the channels through which the radio frequency modules of two STAs of a multi-link device communicate is sufficiently large, the two STAs may not interfere with each other, i.e. the two STAs may operate independently. If the channels through which the radio frequency modules of two STAs of a multi-link device communicate are close to each other, mutual interference may occur, especially when one STA is sending, interference may occur to the other receiving STA. Therefore, when multiple links are established between the AP MLD and the non-AP MLD, if any two links support sending on one link while receiving on the other link, it can be considered that the two links support simultaneous transmit and receive (STR) capabilities, otherwise it can be considered that the two links cannot transmit and receive (non-STR, NSTR) simultaneously.

### The establishment manner of multi-link

The process of multi-link establishment is discussed in some patents. The link establishment of a multi-link device may be achieved by sending a multi-link association request frame carrying supported and desired link information. However, in practical applications, if there is no service requirement, if the MLD establishes multi-link communication on all the links it supports from the beginning, it will lead to low link resource utilization. In the subsequent communication process, the MLD may also have the need to update the communication link. Traditional multi-link communication has some technical problems, such as poor flexibility and unable to meet the requirements of practical applications. Therefore, in the multi-link management scheme proposed in some patents, the AP MLD and the STA MLD may interact with each other for information on whether the establishment, addition, and deletion of the link are successful, the identifications of at least two links are carried, and a link is added or deleted in the established multi-link communication links according to the communication requirements, which further improves the flexibility of multi-link communication. By carrying the mapping information of the service and the link, the mapping relationship between the service and the link is established when the multi-link is established, or the mapping relationship between the service and the link is updated after the multi-link is established, so as to realize more flexible management of the service transmission and improve the service quality.

### Channel access technology of multi-link devices

In some implementations, for an MLD operating in the STR mode, a plurality of APs and STAs affiliated to the MLD may independently perform channel access on respective links, and each affiliated STA independently selects its own channel access parameters, and data transmission start/stop times and the ACK response times are different and independent of each other. After obtaining transmission opportunities through DCF mechanism or EDCA mechanism, the affiliated devices that do not have STR performance on some links may choose to postpone channel access operation and wait for synchronization and alignment of other links, for consideration of interference avoidance.

Channel contention access in NSTR mode is divided into single primary channel access and multi-primary channel access. Under the single primary channel access mechanism, only one link (primary link) set in advance can perform channel contention, and channel access of all other links depends on its access status. When the backoff counter of the primary link is reduced to 0, the remaining secondary links check a preset period before the completion of the primary link's backoff, if idle, they can access the channel synchronously with the primary link, and if the channel is busy during the secondary link detection time, only the primary link performs data transmission. Under the multi-primary channel access mechanism, each link can perform channel competition, the link that backs off to 0 first is the primary link, and the primary link waits for the remaining links to backoff to 0 or the remaining links check within a preset period before the completion of the primary link's backoff that whether they are idle during the detection time, and performs synchronous transmission with the primary link.

Based on the above introduction, it can be seen that more channel transmission opportunities can be obtained in STR mode, and the throughput performance is high, but there will be in-device coexistence (IDC) interference between multiple links. In NSTR mode, transmission performed on multiple links synchronously, which avoids IDC interference, but the throughput is significantly reduced compared with STR mode.

### Enable/disable mechanism for MLD

It is specified in some protocols (e.g., 802.11 be draft) that it may be indicated, through an enable/disable mechanism, a TID to link mapping mechanism, that a link is enabled or disabled.

Under the de-enabling mechanism, the AP MLD may request to temporarily stop the operation of the base station subsystem (BSS) corresponding to the affiliated AP(s) of the multi-link device, and for all associated non-AP MLDs, the link will be disabled even if an associated non-AP MLD is running on the link. Under the enable mechanism, the AP MLD may request to restart the BSS operation corresponding to the affiliated AP(s) on the enabled link(s). When initiated by the AP MLD, all non-AP MLDs associated with it are notified under the de-enable mechanism that all services on the link are stopped, including data transmission and reception, transmission of Beacon frames and probe response frames.

Under the TID to link mapping mechanism, both AP MLD and non-AP MLD can initiate and carry TID to link mapping information. The mapping relationship between services and links can be negotiated between the non-AP MLD and the AP MLD to achieve flexible link management.

At present, multi-link devices may use multiple links to communicate in parallel, which significantly improves the transmission rate. However, for a multi-link device, multiple links communicating together will inevitably increase power consumption. Therefore, in order to save power, the non-AP MLD can temporarily deactivate some links when the traffic volume is low to achieve the purpose of energy saving. When the traffic comes, all links can be turned on to balance energy consumption and capacity. In the traditional multi-link management scheme, two implementations, AP MLD indication and non-AP MLD indication, are designed according to different initiators. Under the AP MLD indication mode, the AP MLD carries link indication information in the first frame to indicate to activate the second link(s) of the non-AP MLD, thereby realizing quick switching of the communication mode of the non-AP MLD, and reducing energy waste caused by blindly activating all links of the non-AP MLD. Under the non-AP MLD indication mode, the non-AP MLD may transmit a second frame to the AP MLD on the second link, and the second frame carries information of the second link(s) and other associated links, and is used to indicate to deactivate the second link(s) to reduce energy consumption of the multi-link device.

However, the conventional multi-link management scheme does not mention the communication link used to transmit the first frame, which may lead to the failure of transmission of the first frame. In the transmission process of the second frame transmission, the second frame may be transmitted through the first link, that is, the managed link and the link for transmitting the second frame are a same link, which may lead to a decrease in reliability of transmitting the second frame. For example, when the communication quality of the first link is low, it is desirable to deactivate the first link. In this case, if still transmitted over the second link, the second frame may not be transmitted correctly.

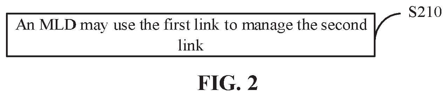

Therefore, in view of the above problems, embodiments of the present application provide a method for radio communication in which second link(s) can be managed by using first link(s), which is helpful to improve the reliability of managing the second link(s). Hereinafter, a method for radio communication according to an embodiment of the present application will be described with reference to FIG. 2. The method as shown in Fig. 2 includes the step S210.

In step S210, An MLD may use the first link(s) to manage the second link(s). The first link(s) is link(s) different from the second link(s).

In some implementations, the MLD may include a non-AP MLD and/or an AP MLD.

In some implementations, the frequency band corresponding to the first link(s) is lower than the frequency band corresponding to the second link(s). For example, the frequency band corresponding to the first link(s) may be the low frequency band described above, and correspondingly, the frequency band corresponding to the second link(s) may be the millimeter wave frequency band described above, so the second link(s) may also be referred to as a "millimeter wave frequency band".

In some implementations, the above step S210 may include that the MLD uses the first link(s) to manage the activation and/or deactivation of the second link(s) or that the MLD uses the first link(s) to activate the second link(s) or deactivate the second link(s).

Taking the second link being a millimeter wave link as an example, generally, the energy consumption required for communication based on the millimeter wave link is high, which may cause the power consumption of the multi-link device to be too fast. Therefore, in the embodiment of the present application, the first link(s) can be used to activate and/or deactivate the millimeter wave link, and the communication based on the millimeter wave link can be used for temporary capacity expansion, which is helpful to save energy consumption while conserving transmission efficiency.

The embodiment of the present application does not limit the activation of the second link(s). In some implementations, the activation of the second link(s) may include switching the second link(s) from a sleep mode to an active mode, or switching the mode of the second link(s) from a sleep mode in an available mode to an active mode in an available mode. In other implementations, activation of the second link(s) may include switching the second link(s) from a disable mode to an enable mode, or switching the mode of the second link(s) from an unavailable mode to an available mode. For example, activation of the second link(s) may include switching the second link(s) from a disable mode to a sleep mode. For another example, activation of the second link(s) may include switching the mode of the second link(s) from an unavailable mode to an active mode in an available mode.

The embodiment of the present application does not limit the deactivation of the second link(s). In some implementations, deactivation of the second link(s) may include switching the second link(s) from an active mode to a sleep mode, or switching the mode of the second link(s) from an active mode in an available mode to a sleep mode in an available mode. In other implementations, deactivation of the second link(s) may include switching the second link(s) from an enable mode to a disable mode or switching the mode of the second link(s) from an available mode to an unavailable mode. For example, deactivation of the second link(s) may include switching the second link(s) from a sleep mode to an unavailable mode. For another example, deactivation of the second link(s) may include switching the mode of the second link(s) from an active mode in the available mode to an unavailable mode.

Generally, the working mode of a link can be divided into an enable mode (also referred to as an "enabled mode") and a disable mode (also referred to as a "disabled mode"). The enable mode is used to indicate that the link is in an available mode, and when the link is in the enable mode, it indicates that the link can be used to perform communication (e.g., transmit data). The disable state is used to indicate that the link is in a disable mode, and if the link is in a disable mode, it indicates that the link cannot be used to perform communication. At present, when the communication mode of a link is switched from the disable mode to the enable mode, it is needed to execute a link re-establishment procedure.

Later, in order to reduce power consumption, a sleep mode and an active mode are introduced to the link in the enable mode. When there is no data needs to be transmitted on the link, the link enters sleep mode. During sleep mode, the device deactivates the function of receiving and sending data to save energy. When the device has data needs to be transmitted, the link switches from sleep mode to active mode. Under the active mode, the device can receive and transmit data. It should be noted that unlike switching the link from the disable mode to the enable mode, when the link is switched from the sleep mode to the active mode, the link re-establishment procedure does not need to be performed.

In the embodiment of the present application, the determination strategy of activation or deactivation of the second link(s) is not limited. In some implementations, the activation or deactivation of the second link(s) may be determined based on the traffic volume of the traffic to be transmitted. For example, if the traffic volume of the service to be transmitted is large, the second link(s) may be activated. For another example, if the traffic volume of the service to be transmitted is small, the second link(s) may be deactivated. In other implementations, the activation or deactivation of the second link(s) may be determined based on the communication quality of the first link(s). For example, if the communication quality of the first link(s) is poor, the second link(s) may be activated. For another example, if the communication quality of the first link(s) is good, the second link(s) may be deactivated. Of course, in the embodiment of the present application, it is also possible to determine whether the second link(s) is activated or deactivated based on the traffic volume of the service to be transmitted and the communication quality of the first link(s). For example, if the communication quality of the first link(s) is poor and the traffic volume of the traffic to be transmitted is large, the second link(s) may be deactivated. For another example, if the communication quality of the first link is better and the traffic volume of the traffic to be transmitted is small, the second link(s) may be closed.

In some implementations, if the second link(s) has a mapping relationship with at least one traffic stream, the at least one traffic stream also has a mapping relationship with one or more first links. Alternatively, when at least one traffic identifier is mapped to the second link(s), the traffic identifier(s) mapped by the second link(s) is at least mapped to one or more first links, so that the second link(s) can be activated relatively quickly when there is a responsive traffic needs to be transmitted.

In some implementations, when no traffic identifier is mapped to the second link(s), all traffic identifiers may be mapped to one or more first links, thereby ensuring that when the traffic corresponding to the TID(s) mapped by the second link(s) arrives, even if the second link(s) is in a sleep mode or the communication quality of the second link(s) is poor, the transmission of the corresponding traffic can be carried out through the first link(s), which is helpful to improve the reliability of transmitting the corresponding traffic.

The meaning of managing the second link(s) in the embodiments of the present application has been described above, and methods of triggering the management of the second link(s) in the embodiments of the present application will be described below in conjunction with triggering modes 1 ~ 2.

**Trigger mode 1: the management of the second link(s) may be requested by the non-AP MLD.**

That is, the above step S210 may include that the first non-AP MLD sends a first frame to the AP MLD on the first link(s). The first frame is used to request to activate or deactivate the second link(s).

In some implementations, there may be one or more second links for the first non-AP MLD. The first frame described above may be used to indicate that some or all of multiple second links are activated or deactivated.

In some implementations, the first frame includes first indication information. The first indication information includes one or more of: indication information of activation or deactivation of the second link(s); identification information of the second link(s); indication information of an access mode of the second link(s); or indication information of whether to perform beam training for the second link(s).

For example, the first indication information includes indication information of activation or deactivation of the second link(s), or the first indication information is used to indicate activation or deactivation of the second link(s), the first indication information thus may also be referred to as a "second link transmission indication". In some implementations, the indication information may occupy one bit, which is helpful for reducing transmission overhead. If the value of this bit is the first value, it indicates activation of the second link(s). If the value of this bit is the second value, it indicates deactivation of the second link(s). The first value and the second value may be different. For example, the first value may be 1 and the second value may be 0. For another example, the first value may be 0, and the second value may be 1. Of course, in the embodiment of the present application, the indication information may occupy a plurality of bits.

It should be noted that, based on the meaning of activation of the second link(s) and deactivation of the second link(s) described above, it may be understood that the first indication information is used for indicating the mode of the second link(s). For example, when the value of the first indication information is 0, it indicates that the second link(s) is in a sleep mode in an available mode. When the value of the first indication information is 1, it indicates that the second link(s) is in an active mode in the available mode. When the value of the first indication information is 2, it indicates that the second link(s) is in an unavailable mode. In an embodiment of the present application, a value greater than 2 may be set as a reserved value.

For example, the first indication information includes identification information of the second link(s), or the first indication information is used to indicate the second link(s). The identification information of the second link(s) may be identifier(s) of the link(s) that the first non-AP MLD requests to activate or deactivate.

For example, the first instruction information includes indication information of the access mode of the second link(s), or the first indication information is used to indicate the access mode of the second link(s). In some implementations, the access mode of the second link(s) may include one or more of the following: an access mode based on the assistance of the first link(s) or an independent access mechanism. The independent access mechanism may include a second link independent access mechanism in the STR mode and/or a second link independent access mechanism in the NSTR mode. The second link independent access mechanism may include an access method based on channel scanning. Further, the access mode based on the assistance of the first link(s) will be described in detail below. Of course, the access method according to the embodiment of the present application may also include other access modes.

In some scenarios, the above-described access mode may be understood as an access mode for accessing a certain channel in the second link(s). Therefore, the above-described access mode may also be referred to as a "channel access mode", and accordingly, the above-described first indication information may be referred to as a "channel access indication".

For example, the first indication information includes indication information of whether to perform beam training for the second link(s), or the first indication information is used to indicate whether to perform beam training for the beam(s) corresponding to the second link(s). Therefore, the indication information may also be referred to as a "beam training indication field".

In some implementations, the above beam training may include a sector-level sweep (SLS) phase and/or a beam refinement protocol (BRP) phase. Generally, after the beam training is completed, the two communicating parties can communicate directionally through the directional beam(s).

In some implementations, the indication information may occupy one bit, which is helpful for reducing transmission overhead. If the value of this bit is the first value, it indicates performing beam training. If the value of this bit is the second value, it means not performing beam training. The first value and the second value may be different, for example, the first value may be 1 and the second value may be 0. For another example, the first value may be 0, and the second value may be 1. Of course, in the embodiment of the present application, the indication information may occupy a plurality of bits.

The embodiment of the present application does not limit the method of determining whether to perform beam training. In some implementations, it may be determined whether to perform beam training for the second link(s) according to the link quality of the second link(s). For example, if the link quality of the second link(s) is lower than the threshold value 1, it may be determined to perform beam training for the second link(s). Conversely, if the link quality of the second link(s) is lower than the threshold value 2, it may be determined to not perform beam training for the second link(s). The threshold value 1 and the threshold value 2 may be same or different. Additionally, the threshold 1 and/or the threshold 2 may be determined based on one or more of the following: predefined information, pre-configuration information, or configuration information sent by the network device.

In some implementations, the above method further includes: the AP MLD sends a response frame of a first frame to the first non-AP MLD on the first link(s). The response frame of the first frame is used to indicate whether to agree to activate or deactivate the second link(s), or the response frame of the first frame is used to indicate whether the second link(s) is allowed to be activated or deactivated, or the response frame of the first frame is used to indicate whether the AP MLD allows to activate or deactivate the second links(s).

In some implementations, the response frame of the first frame includes second indication information. The second indication information is used to indicate one or more of: whether to agree to activate or deactivate the second link(s); whether to agree to perform beam training for the second link(s); identification information of the second link(s); or the access mode of the second link(s).

For example, the second indication information is used to indicate whether to agree to activate or deactivate the second link(s), or the second indication information is used to indicate whether the AP MLD allows to activate or deactivate the second link(s). Therefore, the second indication information may also be referred to as a "second link transmission indication".

In some implementations, the indication information may occupy one bit, which is helpful for reducing transmission overhead. If the value of the bit is the first value, it indicates that the second link(s) is allowed to be activated or deactivated. If the value of the bit is the second value, it indicates that the second link(s) is not allowed to be activated or deactivated. The first value and the second value may be different, for example, the first value may be 1 and the second value may be 0. For another example, the first value may be 0, and the second value may be 1. Of course, in the embodiment of the present application, the indication information may occupy a plurality of bits.

It should be noted that, based on the meanings of activation of the second link and deactivation of the second link described above, it may be understood that the second indication information is used to indicate whether it is allowed to set the mode of the second link(s). For example, when the value of the second indication information is 0, it indicates that it is allowed to set the second link(s) in the sleep mode under the available mode. When the value of the second indication information is 1, it indicates that it is allowed to set the second link(s) in the active mode under the available mode. When the value of the second indication information is 2, it indicates that it is allowed to set the second link(s) in the unavailable mode. In an embodiment of the present application, a value greater than 2 may be set as a reserved value.

In an example, the second indication information is used to indicate identification information of the second link(s), or the second indication information is used to indicate the second link(s).

In an example, the second indication information is used to indicate whether to agree to perform the beam training for the second link(s), or the second indication information is used to indicate whether to agree to perform the beam training for the beam(s) corresponding to the second link(s), or the second indication information is used to indicate whether the AP MLD allows to perform beam training for the beam(s) corresponding to the second link(s). Thus, the second instruction information may also be referred to as "beam training instruction".

In some implementations, the indication information may occupy one bit, which is helpful for reducing transmission overhead. If the value of this bit is the first value, it indicates that performing beam training is allowed. If the value of this bit is the second value, it indicates that performing beam training is not allowed. The first value and the second value may be different, for example, the first value may be 1 and the second value may be 0. For another example, the first value may be 0, and the second value may be 1. Of course, in the embodiment of the present application, the indication information may occupy a plurality of bits.

The embodiment of the present application does not limit the method of determining whether performing beam training is allowed. In some implementations, whether to perform beam training for the second link(s) may be determined according to the link quality of the second link(s). For example, if the link quality of the second link(s) is lower than the threshold value 1, performing beam training for the second link(s) may be allowed. Conversely, if the link quality of the second link(s) is lower than the threshold 2, not performing beam training for the second link(s) may be rejected. The threshold value 1 and the threshold value 2 may be same or different. Additionally, the threshold 1 and/or the threshold 2 may be determined based on one or more of the following: predefined information, pre-configuration information, or configuration information sent by the network device.

In an example, the second indication information is used to indicate whether to agree the access mode of the second link(s), or the second indication information is used to indicate whether the access mode of the second link(s) is allowed to be used. In some implementations, the access mode of the second link(s) may include one or more of the following: an access mode based on the assistance of the first link(s) or an independent access mechanism. The independent access mechanism may include a second link independent access mechanism in the STR mode and/or a second link independent access mechanism in the NSTR mode. The second link independent access mechanism may include an access method based on channel scanning. Further, the access mode based on the assistance of the first link(s) will be described in detail below. Of course, the access method according to the embodiment of the present application may also include other access modes.

In some scenarios, the above-described access mode may be understood as an access mode for accessing a certain channel in the second link(s). Therefore, the above-described access mode may also be referred to as a "channel access mode", and accordingly, the above-described second indication information may be referred to as a "channel access indication".

In the embodiment of the present application, the type of the first frame and/or the type of the response frame of the first frame is not limited. In some implementations, the first frame may be one or more of: a data frame, a management frame, or a control frame. In other implementations, the response frame of the first frame may be one or more of: a data frame, a management frame, or a control frame. For example, the first frame and the response frame of the first frame are both management frames. For another example, the first frame is a data frame and the response frame of the first frame is a control frame. For another example, both the first frame and the response frame of the first frame are control frames.

In other implementations, the first frame and the response frame of the first frame may be one of: the first frame is a link request frame and the response frame of the first frame is a link response frame; the first frame is a data frame and the response frame of the first frame is an acknowledgement frame (ACK frame); or the first frame is a PS-POLL frame and the response frame of the first frame is an acknowledgement frame.

It should noted that, in some scenarios, when the response frame of the first frame is an ACK frame, the ACK frame may only indicate that the first frame is successfully received, and in this case, the ACK frame may not carry the second indication information, and in this case, the frame structure of the ACK may adopt a traditional frame structure. Of course, in the embodiment of the present application, the frame structure of the ACK may be modified so that the ACK frame can carry the above-described second indication information.

**Trigger mode 2: The management of the second link(s) may be indicated by the AP MLD.**

That is, the above step S210 includes: the AP MLD sends a second frame on the first link(s), the second frame is used to manage the activation and/or deactivation of the second link(s) corresponding to the one or more non-AP MLDs, or the second frame is used to indicate the activation and/or deactivation of the second link(s) corresponding to the one or more non-AP MLDs.

In the embodiment of the present application, if the AP MLD manages the second link(s) corresponding to multiple non-AP MLDs, the AP MLD can simultaneously manage the second links corresponding to the multiple non-AP MLDs by sending one second frame, which is helpful to improve the efficiency of managing the multiple non-AP MLDs by the AP MLD. Of course, in the embodiment of the present application, the AP MLD may respectively manage the second links corresponding to the multiple non-AP MLDs by sending multiple second frames, which is helpful to improve the flexibility of the AP MLD in managing the multiple non-AP MLDs.

It should be noted that the above one or more non-AP MLDs may be part or all of non-AP MLDs associated with the AP MLD, and the embodiments of the present application are not limited thereto.

In some implementations, the second frame includes a first field that includes one or more of the following: indication information of activation or deactivation of second link(s) corresponding to each of the one or more non-AP MLDs; identification information of second link(s) corresponding to each of the one or more non-AP MLDs; identification information of one or more non-AP MLDs; indication information of an access mode of second link(s) corresponding to each non-AP MLD of the one or more non-AP MLDs; or indication information of whether to perform beam training for second link(s) corresponding to each of the one or more non-AP MLDs.

In an example, the first field includes the indication information of activation or deactivation of second link(s), or the information in the first field is used to indicate activation or deactivation of second link(s). Therefore, the indication information may also be referred to as "second link transmission indication". In some implementations, the indication information may occupy one bit, which is helpful for reducing transmission overhead. If the value of this bit is the first value, it indicates activation of the second link(s). If the value of this bit is the second value, it indicates deactivation of the second link(s). The first value and the second value may be different, for example, the first value may be 1 and the second value may be 0. For another example, the first value may be 0, and the second value may be 1. Of course, in the embodiment of the present application, the indication information may occupy a plurality of bits.

It should be noted that each non-AP MLD of the one or more non-AP MLDs may correspond to a different second link transmission indication, so as to indicate to activate or deactivate the second link(s) corresponding to the corresponding non-AP MLD, which is helpful to improve the flexibility of indication information. For example, the multiple non-AP MLDs include the non-AP MLD1 and the non-AP MLD2. In this case, the second link transmission indication corresponding to the non-AP MLD1 may indicate the activation of the second link(s) corresponding to the non-AP MLD1, and the second link transmission indication corresponding to the non-AP MLD2 may indicate the deactivation of the second link(s) corresponding to the non-AP MLD2.

Of course, in the embodiment of the present application, each non-AP MLD of the one or more non-AP MLDs may correspond to the same second link transmission indication, so as to indicate activation or deactivation of the second link(s) corresponding to the corresponding non-AP MLD, which is helpful to reduce the overhead of transmitting the indication information. For example, the multiple non-AP MLDs include non-AP MLD1 and non-AP MLD2. In this case, the second link transmission indication corresponding to the non-AP MLD1 and the non-AP MLD2 may indicate activation of the second link(s) corresponding to the non-AP MLD1 and the non-AP MLD2.

For example, the first field includes the second link corresponding to each of the one or more non-AP MLDs, or the information in the first field is used to indicate the second link corresponding to each of the one or more non-AP MLDs.

For example, the first field includes identification information of one or more non-AP MLDs, or the information in the first field is used to indicate each non-AP MLD of the one or more non-AP MLDs.

For example, the first field includes indication information of the access mode of the second link(s) corresponding to each non-AP MLD of the one or more non-AP MLDs, or the information in the first field is used to indicate the access mode of the second link(s) corresponding to each non-AP MLD of the one or more non-AP MLDs. In some implementations, the access mode of the second link(s) may include one or more of the following: an access mode based on the assistance of the first link(s) or an independent access mode. The independent access mode may include a second link independent access mode in the STR mode and a second link independent access mode in the NSTR mode. The second link independent access mode may include an access mode based on channel scanning. Further, the access mode based on the assistance of the first link(s) will be described in detail below. Of course, the access mode according to the embodiment of the present application may also include other access modes.

In some scenarios, the above-described access mode may be understood as an access mode for accessing a certain channel in the second link(s). Therefore, the above-described access mode may also be referred to as "channel access method", and accordingly, the above-described indication information may be referred to as "channel access indication".

It should be noted that, in the embodiment of the present application, each non-AP MLD of the one or more non-AP MLDs may correspond to a different channel access indication, which is helpful to improve the flexibility of the indication. For example, when the multiple non-AP MLDs include the non-AP MLD1 and the non-AP MLD2, the channel access indication corresponding to the non-AP MLD1 may indicate that the access mode of the second link(s) corresponding to the non-AP MLD1 is the access mode 1, and the channel access indication corresponding to the non-AP MLD2 may indicate that the access mode of the second link(s) corresponding to the non-AP MLD2 is the access mode 2.

Of course, in the embodiment of the present application, each non-AP MLD of the one or more non-AP MLDs may correspond to the same channel access indication, which is helpful to reduce the overhead of transmitting the indication information. For example, multiple non-AP MLDs include non-AP MLD1 and non-AP MLD2. In this case, the channel access indication corresponding to the non-AP MLD1 and the non-AP MLD2 may indicate that the access mode of the second link(s) corresponding to the non-AP MLD1 and the non-AP MLD2 is access mode 1.

For example, the first field includes indication information of whether to perform beam training for the second link(s) corresponding to each non-AP MLD in the one or more non-AP MLDs, or the information in the first field is used to indicate whether to perform beam training for the beam(s) corresponding to the second link(s) corresponding to each non-AP MLD in the one or more non-AP MLDs. Therefore, the indication information may also be referred to as "beam training indication".

In some implementations, the indication information may occupy one bit, which is helpful for reducing transmission overhead. If the value of this bit is the first value, it indicates performing beam training. If the value of this bit is the second value, it means not performing beam training. The first value and the second value may be different, for example, the first value may be 1 and the second value may be 0. For another example, the first value may be 0, and the second value may be 1. Of course, in the embodiment of the present application, the indication information may occupy a plurality of bits.

Note that, in the embodiment of the present application, each non-AP MLD of the one or more non-AP MLDs may correspond to a different beam training indication, which is helpful to improve the flexibility of the indication. For example, the multiple non-AP MLDs include the non-AP MLD1 and the non-AP MLD2. In this case, the beam training indication corresponding to the non-AP MLD1 may indicate that beam training needs to be performed for the second link(s) corresponding to the non-AP MLD1, and the beam training indication corresponding to the non-AP MLD2 may indicate that the beam training does not need to be performed for the second link(s) corresponding to the non-AP MLD2.

Of course, in the embodiment of the present application, each non-AP MLD of the one or more non-AP MLDs may correspond to the same beam training indication, so as to indicate whether beam training needs to be performed for the second link(s), which is helpful to reduce the overhead of transmitting the indication information. For example, the multiple non-AP MLDs include non-AP MLD1 and non-AP MLD2. In this case, the beam training indication corresponding to the non-AP MLD1 and the non-AP MLD2 may indicate that beam training needs to be performed for the second link(s) corresponding to the non-AP MLD1 and the non-AP MLD2.

The embodiment of the present application does not limit the method of determining whether to perform beam training. In some implementations, whether to perform beam training for the second link(s) may be determined according to the link quality of the second link(s). For example, if the link quality of the second link(s) is lower than the threshold value 1, it may be determined to perform beam training for the second link(s). Conversely, if the link quality of the second link(s) is lower than the threshold value 2, it may be determined to not perform beam training for the second link(s). The threshold value 1 and the threshold value 2 may be same or different. Additionally, the threshold 1 and/or the threshold 2 may be determined based on one or more of the following: predefined information, pre-configuration information, or configuration information sent by the network device.

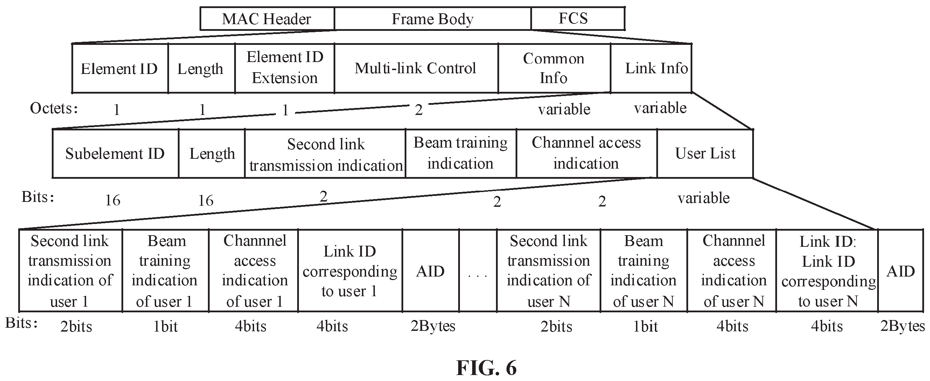

Based on the above description, it can be understood that the information carried in the first field is used to manage the second link(s) corresponding to each non-AP MLD of the one or more non-AP MLDs. Therefore, the above field may be referred to as a "user list". Hereinafter, it will be described in detail with reference to FIGs. 6 to 9, and will not be repeatedly described here for the sake of brevity.

In some implementations, the one or more non-AP MLDs may include a first non-AP MLD. The method further includes: the first non-AP MLD sends a response frame of a second frame to the AP MLD on the first link(s). The response frame of the second frame is used to indicate whether the first non-AP MLD agrees to activate or deactivate the second link(s) corresponding to the first non-AP MLD.

In some implementations, the response frame of the second frame includes third indication information. The third indication information is used to indicate one or more of: whether to agree to activate or deactivate the second link(s) corresponding to the first non-AP MLD; whether to agree to perform beam training for the second link(s) corresponding to the first non-AP MLD; identification information of second link(s) corresponding to the first non-AP MLD; or an access mode of the second link(s) corresponding to the first non-AP MLD.

In the embodiment of the present application, the related contents in the third indication information are similar to the related contents in the second indication information, and the description of the second indication information above can be referred to, and the description thereof will not be repeated here for the sake of brevity.

In the embodiment of the present application, the type of the second frame and/or the type pf the response frame of the second frame is not limited. In some implementations, the second frame may be one or more of: a data frame, a management frame, or a control frame. Taking the second frame being a control frame as an example, the second frame may be a beacon frame. In other implementations, the response frame of the second frame may be one or more of: a data frame, a management frame, or a control frame. For example, the second frame and the response frame of the second frame are both management frames. For another example, the second frame is a data frame and the response frame of the second frame is a control frame.

In other implementations, the second frame and the response frame of the second frame may be one of the following: if the second frame is a link request frame, the response frame of the second frame is a link response frame; or if the second frame is a data frame, the response frame of the second frame is an acknowledgement frame.

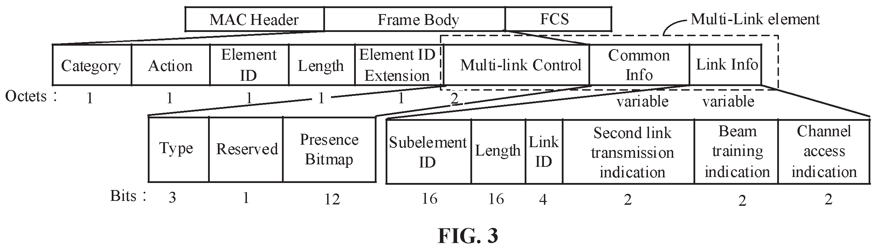

In order to facilitate understanding, frames and frame structures to which the embodiments of the present application are applicable will be described below with reference to FIGs. 3 to 9. It should be understood that the information content carried in the frame has been described above, and the following will focus on the fields carrying information in the embodiments of the present application.

Assuming that the first frame or the response frame of the first frame may be an action frame in the management frame, FIG. 3 shows a frame structure of the first frame or the response frame of the first frame in the embodiment of the present application. Referring to FIG. 3, an action frame may include a media access control (MAC) header (MAC header), a frame body, and a frame check sequence (FCS).

In some implementations, the frame body may be used to carry information to be transmitted. With continued reference to FIG. 3, the frame body may include one or more of the following: a category field, an action field, an element identification field, a length field, an element identification extension field, and a multi-Link element field.

The category field described above is used to indicate the function of the frame. For example, when the value of the category field is N, it means that the frame is used for link management. Generally, the value range of this field is 30 ~ 125.

The above action field is used to indicate action details under the action category performed in the category field. Generally, action frame may use the X-th element of this field to specify the action details to be taken. For example, for a link request and/or link response frame, the value of the X-th element in the field may be 0. Of course, in the embodiment of the present application, the value of the X-th element in the field may be selected from the reserve values corresponding to the existing categories. For example, the value of the X-th element may be the first one of the reserved values in this link management category.

It should be noted that, in combination with the category field and the action field, it may be only determined that the frame is related to link management, for example, the frame is used to manage the second link(s). However, it cannot be specifically determined whether the frame is used for a link request or a link response based on these two fields. In this case, it is possible to distinguish whether the frame is used for a link request or a link response based on the sending end of the frame. For example, if the sending end of the frame is the AP MLD, the frame is used for link response. For another example, if the sending end of the frame is a non-AP MLD, the frame is used for a link request. Of course, in the embodiment of the present application, the link request or the link response may be distinguished based on the difference in the values of the action field.

The multi-link element field is used for carrying information related to multi-link. In some implementations, the multi-link element may include one or more of: a multi-link control field, a common info field, or a link info field.

The multi-link control field described above is used to support multi-link communication and coordinate multiple links in a network. This field may include one or more of the following fields: a type field, a reserved field, or a presence bitmap field. The presence bitmap field is used to indicate whether an information element corresponding to each bit in the bit bitmap exists in an action frame.

In the embodiment of the present application, the value of the multi-link control field may be a reserved value (for example, any value in 5 to 7), which is used to identify that the field is a new multi-link element type defined in the embodiment of the present application, for example, the field may indicate that this is a multi-link element associated with the second link(s).

The above-described link information field may include one or more of the following fields: a subelement ID field, a length field, a second link transmission indication field, a beam training indication field, or a channel access mode indication field. The subelement ID is used to identify the link information field, or the subelement ID is used to identify that the content in the link information field is the second link management element. Generally, the value range of the subelement ID may be 1~220. Of course, in the embodiment of the present application, the subelement ID may take other values. The above length is used to represent the length of the link information field.

If the action frame is a link request, the second link transmission indication, the beam training indication, and the channel access mode indication may be used to carry the first indication information. For example, when the value of the second link transmission indication is 0, it indicates that the second link(s) is in a sleep mode in an available mode. When the value of the second link transmission indication is 1, it indicates that the second link(s) is in an active state in an available state. When the value of the second link transmission indication is 2, it indicates that the second link(s) is in an unavailable state. In an embodiment of the present application, a value greater than 2 may be set as a reserved value.

For example, when the value of the beam training indication is 0, it indicates not performing beam training for the beam(s) in the second link(s). When the value of the beam training indication is 1, it indicates performing beam training for the beam(s) in the second link(s). In an embodiment of the present application, a value greater than 1 may be set as a reserved value.

For example, when the value of the channel access mode indication is 0, it indicates that the channel access mode based on assistance of the first link(s) is adopted. When the value of the channel access mode indication is 1, it indicates that the second link independent access mode in the STR mode is adopted. When the value of the channel access mode indication is 2, it indicates that the second link independent access mode in the NSTR mode is adopted. In an embodiment of the present application, a value greater than 1 may be set as a reserved value.

If the action frame is a link response, the second link transmission indication, the beam training indication, and the channel access mode indication may be used to carry the second indication information. That is, the second link transmission indication is used for indicating whether it is allowed to switch the mode of the second link(s) to the mode of the second link(s) indicated in the link request. The beam training indication is used for indicating whether it is allowed to perform beam training for beam(s) in the second link(s) based on the indication in the link request. The channel access mode indication is used to indicate whether it is allowed to use the access mode of the second link(s) indicated in the link request.

In the embodiment of the present application, the length of each field in the frame is not limited. In order to facilitate understanding, an example of the length of each field in the embodiments of the present application is described below with reference to FIG. 3. As shown in FIG. 3, the length of the category field may be 1 byte, the length of the action field may be 1 octet, the length of the element ID field may be 1 octet, the length of the length field may be 1 octet, the length of the element ID extension field may be 1 octet, the length of the multi-link control field may be 2 octets, and the lengths of the common information field and the link information field may be variable. In the multi-link control field, the length of the type field may be 3 bits, the length of the reserved field may be 1 bit, and the length of the presence bitmap field may be 12 bits. In the link information, the length of the subelement ID may be 16 bits, the length of the length field may be 16 bits, the length of the second link ID field may be 4 bits, and the length of the second link transmission indication field may be 2 bit, the length of the beam training indication field may be 2 bits, and the length of the channel access indication field may be 2 bits.

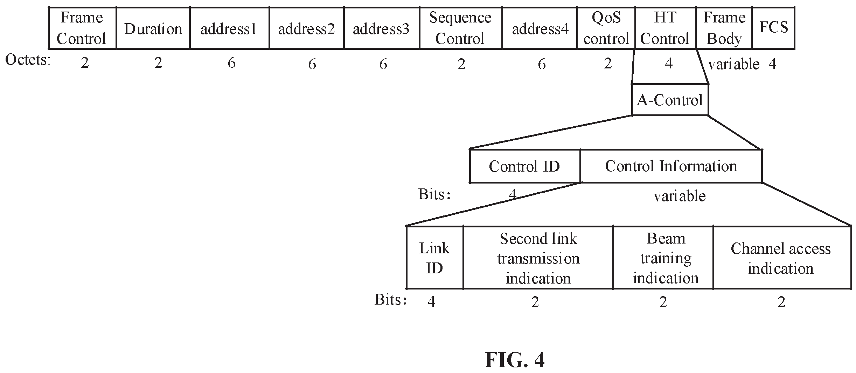

Assuming that the first frame may be a data frame, FIG. 4 shows a frame structure of data frame applicable to the first frame of an embodiment of the present application. Referring to FIG. 4, the data frame may include a MAC header, a frame body, and an FCS. The MAC header may include one or more of the following fields: a frame control field, a duration field, an address 1 field, an address 2 field, an address 3 field, sequence control, an address 4 field, a QoS control field, or an HT control field.

Referring to FIG. 4, the HT control field may include an aggregate control (A-control) field, which may include control ID and control information. The control information may be used to carry the second indication information described above. That is, the control information may include link ID of the second link(s), the second link transmission indication, the beam training indication, and the channel access indication.

In the embodiment of the present application, the length of each field in the data frame is not limited. In order to facilitate understanding, an example of the length of each field in the data frame in the embodiment of the present application will be described below with reference to FIG. 4. Referring to FIG. 4, the length of the frame control field may be 2 octets, the length of the duration field may be 2 octets, the length of the address 1 field may be 6 octets, the length of the address 2 field may be 6 octets, the length of the address 3 field may be 6 octets, the length of the sequence control field may be 2 octets, the length of the address 4 field may be 6 octets, the length of the QoS control field may be 2 octets, the length of the HT field may be 4 octets, the length of the frame body may be variable, and the length of the FCS field may be 4 octets. In an aggregation control (A-control) field in the HT field, the length of the control ID may be 4 bits, and the length of the control information may be variable. In some scenarios, the content of the information carried in the control information may be different, which may affect the length of the control information. Therefore, setting the length of the control information to a variable length helps improve the adaptability of the data frame to various scenarios. In the control information, the length of the link ID may be 4 bits, the length of the second link transmission indication may be 2 bits, the length of the beam training indication may be 2 bits, and the length of the channel access indication may be 2 bits.

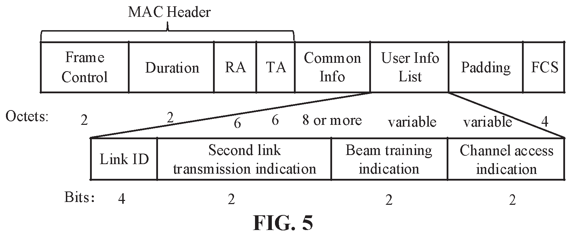

Taking the first frame being a PS-POLL frame in PS mode as an example, FIG. 5 is a schematic diagram of a frame structure of a PS-POLL frame applicable to the first frame in an embodiment of the present application. Referring to FIG. 5, a PS-POLL frame may include one or more of the following fields: a MAC header, a common information field, a user information list field, a padding field, or a FCS field. The MAC header includes one or more of the following fields: frame control, duration, RA or TA.

In some implementations, the user information list may be used to carry the second indication information described above. That is, the user Information list may include one or more of the following fields: a link ID field of the second link(s), a second link transmission indication field, a beam training indication field, or a channel access indication field.

For example, when the value of the second link transmission indication field is 0, it indicates that the second link(s) is in a sleep mode in an available mode. When the value of the second link transmission indication field is 1, it indicates that the second link(s) is in an active mode in an available mode. When the value of the second link transmission indication field is 2, it indicates that the second link is in an unavailable mode. In the embodiment of the present application, a value greater than 2 may be set as the reserved value of the field.

For example, when the value of the beam training indication field is 0, it indicates not performing beam training for the beam(s) in the second link(s). When the value of the beam training indication field is 1, it indicates performing beam training for the beam(s) in the second link(s). In the embodiment of the present application, a value greater than 1 may be set as the reserved value of the field.

For example, when the value of the channel access indication field is 0, it indicates that the channel access mode of assistance of the first link(s) is adopted. When the value of the channel access indication field is 1, it indicates that the second link independent access mode in the STR mode is adopted. When the value of the channel access indication field is 2, it indicates that the second link independent access mode in the NSTR mode is adopted. In the embodiment of the present application, a value greater than 1 may be set as the reserved value of the field.

The frame structures of the frames applicable to the trigger mode 1 in the embodiments of the present application are described above with reference to FIGs. 3 and 5. Hereinafter, the frame structures of frames applicable to the trigger mode 2 in the embodiments of the present application will be described with reference to FIGs. 6 to 9.

Taking the second frame being a link request frame as an example, FIG. 6 shows a frame structure of a link request applicable to the second frame in the embodiment of the present application, and the frame structure may carry the information of the first field described above by adding a user list field as the first field.

Referring to FIG. 6, the frame structure of the link request may include a MAC header, a frame body, and an FCS. The The frame body may include one or more of the following fields: an element ID field, a length field, an element ID extension field, a multi-link control field, a common information field and a link information field.

In some implementations, the link information field may include one or more of the following fields: a subelement ID field, a length field, a second link transmission indication field, a beam training indication field, a channel access indication field and a user list field.

In some implementations, the user list field may include a first field corresponding to user 1 to a first field corresponding to user N. N is a positive integer greater than or equal to 1. For example, the user list field may include one or more of the following fields: a second link transmission indication field for user 1, a beam training indication field for user 1, a channel access indication field for user 1, link ID of second link(s) corresponding to the user 1, association identifier (AID) corresponding to user 1, a second link transmission indication field for user N, a beam training indication field for user N, a channel access indication field for user N, link ID of second link(s) corresponding to the user N, or association identifier (AID) corresponding to user N.

For example, when the value of the second link transmission indication field is 0, it indicates that the second link(s) is in a sleep mode in an available mode. When the value of the second link transmission indication field is 1, it indicates that the second link(s) is in an active mode in an available mode. When the value of the second link transmission indication field is 2, it indicates that the second link is in an unavailable mode. In the embodiment of the present application, a value greater than 2 may be set as the reserved value of the field.

For example, when the value of the beam training indication field is 0, it indicates not performing beam training for the beam(s) in the second link(s). When the value of the beam training indication field is 1, it indicates performing beam training for the beam(s) in the second link(s). In the embodiment of the present application, a value greater than 1 may be set as the reserved value of the field.

For example, when the value of the channel access indication field is 0, it indicates that the channel access mode of assistance of the first link(s) is adopted. When the value of the channel access indication field is 1, it indicates that the second link independent access mode in the STR mode is adopted. When the value of the channel access indication field is 2, it indicates that the second link independent access mode in the NSTR mode is adopted. In the embodiment of the present application, a value greater than 1 may be set as the reserved value of the field.

It should be noted that, if the link request only need to carry a first field corresponding to one user, or the contents of the first fields corresponding to a plurality of users carried by the link request are the same, in this case, the first field may be carried in the second link transmission indication field, the beam training indication field, and the channel access indication field in the link information field, and it is not necessary to carry the above information in each field in the user list. In this case, the user list may only carry the link ID of the second link(s) corresponding to each user and/or the AID corresponding to each user. Of course, in the above scenario, the first field corresponding to each user may be included in the user list. In this case, the second link transmission indication field, the beam training indication field, and the channel access indication field in the link information field may be set as reserved values. For example, in the link information field, the value of the second link transmission indication field may be a reserved value 3, the value of the beam training indication field may be a reserved value 2, and the value of the channel access indication field may be a reserved value 4.

If the contents of the first fields corresponding to a plurality of users carried by the link request are partially or completely different, in this case, the first fields corresponding to various users may be carried in the user list field, and in this case, the second link transmission indication field, the beam training indication field, and the channel access indication field in the link information field may be set as reserved values. That is, if the second link transmission indication field, the beam training indication field, and the channel access indication field in the link information field are reserved values, it indicates that first fields corresponding to different users (that is, non-AP MLD) are carried in the link request. For example, in the link information field, the value of the second link transmission indication field may be a reserved value 3, the value of the beam training indication field may be a reserved value 2, and the value of the channel access indication field may be a reserved value 4.

In the embodiment of the present application, the length of each field in the link request is not limited. In order to facilitate understanding, an example of the length of each field in the embodiments of the present application is described below with reference to FIG. 6. Referring to FIG. 6, the length of the element ID field may be 1 octet. The length of the length field may be 1 octet. The length of the element ID extension field may be 1 octet. The length of the multi-link control field may be 2 octets. The length of the control information field may be 1 octet. The length of the common information field may be a variable length. The length of the link information field may be a variable length. In the link information field, the length of the subelement ID field may be 16 bits. The length of the length field may be 16 bits. The length of the second link transmission indication field may be 2 bits. The length of the beam training indication field may be 2 bits. The length of the channel access indication field may be 2 bits. The length of the user list field may be a variable length. In the user list field, the length of the second link transmission indication field for user N may be 2 bits, the length of the beam training indication field for user N may be 1 bit, the length of the channel access indication field for user N may be 2 bits, the length of the link ID field of the second link(s) corresponding to the user N may be 4 bits, the length of the AID field corresponding to the user N may be 2 bytes.

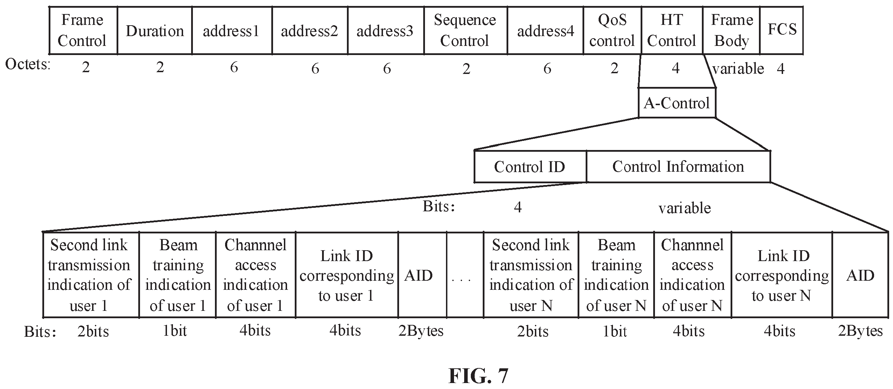

Taking the second frame being a data frame as an example, FIG. 7 shows a frame structure of a data frame applicable to the second frame in the embodiment of the present application. Referring to FIG. 7, the data frame may include MAC header, frame body and FCS. The MAC header may include one or more of the following fields: a frame control field, a duration field, an address 1 field, an address 2 field, an address 3 field, sequence control, an address 4 field, a Quality of Service (QoS) control field, or a high-throughtput (HT) control field.

Referring to FIG. 7, the HT control field may include an aggregate control (A-control) field, which may include control ID and control information. The control information may include one or more of the following fields: a subelement ID field, a length field, a second link transmission indication field, a beam training indication field, a channel access indication field or a user list field.

In some implementations, the user list field may include a first field corresponding to user 1 to a first field corresponding to user N. N is a positive integer greater than or equal to 1. For example, the user list field may include one or more of the following fields: a beam training indication field for user N, a channel access indication field of user N, link ID of second link(s) corresponding to the user N, or AID corresponding to the user N. N is a positive integer greater than or equal to 1.

For example, when the value of the second link transmission indication field is 0, it indicates that the second link(s) is in a sleep mode in an available mode. When the value of the second link transmission indication field is 1, it indicates that the second link(s) is in an active mode in an available mode. When the value of the second link transmission indication field is 2, it indicates that the second link is in an unavailable mode. In the embodiment of the present application, a value greater than 2 may be set as the reserved value of the field.

For example, when the value of the beam training indication field is 0, it indicates not performing beam training for the beam(s) in the second link(s). When the value of the beam training indication field is 1, it indicates performing beam training for the beam(s) in the second link(s). In the embodiment of the present application, a value greater than 1 may be set as the reserved value of the field.

For example, when the value of the channel access indication field is 0, it indicates that the channel access mode of assistance of the first link(s) is adopted. When the value of the channel access indication field is 1, it indicates that the second link independent access mode in the STR mode is adopted. When the value of the channel access indication field is 2, it indicates that the second link independent access mode in the NSTR mode is adopted. In the embodiment of the present application, a value greater than 1 may be set as the reserved value of the field.

It should be noted that, if the data frame only need to carry a first field corresponding to one user, or the contents of the first fields corresponding to a plurality of users carried by the date frame are the same, in this case, the first field may be carried in the second link transmission indication field, the beam training indication field, and the channel access indication field in the link information field, and it is not necessary to carry the above information in each field in the user list. In this case, the user list may only carry the link ID of the second link(s) corresponding to each user and/or the AID corresponding to each user. Of course, in the above scenario, the first field corresponding to each user may be included in the user list. In this case, the second link transmission indication field, the beam training indication field, and the channel access indication field in the link information field may be set as reserved values. For example, in the link information field, the value of the second link transmission indication field may be a reserved value 3, the value of the beam training indication field may be a reserved value 2, and the value of the channel access indication field may be a reserved value 4.

If the contents of the first fields corresponding to a plurality of users carried by the date frame are partially or completely different, in this case, the first fields corresponding to various users may be carried in the user list field, and in this case, the second link transmission indication field, the beam training indication field, and the channel access indication field in the link information field may be set as reserved values. That is, if the second link transmission indication field, the beam training indication field, and the channel access indication field in the link information field are reserved values, it indicates that first fields corresponding to different users (that is, non-AP MLD) are carried in the date frame. For example, in the link information field, the value of the second link transmission indication field may be a reserved value 3, the value of the beam training indication field may be a reserved value 2, and the value of the channel access indication field may be a reserved value 4.

In the embodiment of the present application, the length of each field in the data frame is not limited. In order to facilitate understanding, an example of the length of each field in the embodiments of the present application is described below with reference to FIG. 7. Referring to FIG. 7, the length of the frame control field may be 2 octets, the length of the duration field may be 2 octets, the length of the address 1 field may be 6 octets, the length of the address 2 field may be 6 octets, the length of the address 3 field may be 6 octets, the length of the sequence control field may be 2 octets, the length of the address 4 field may be 6 octets, the length of the QoS control field may be 2 octets, the length of the HT field may be 4 octets, the length of the frame body may be a variable length, and the length of the FCS field may be 4 octets. In the A-control field of the HT field, the length of the control ID may be 4 bits, and the length of the control information may be a variable length. In some scenarios, the content of the information carried in the control information may be different, which may affect the length of the control information. Therefore, setting the length of the control information to a variable length helps improve the adaptability of the data frame to various scenarios. In the control information field, in the user list field, the length of the second link transmission indication field of the user N may be 2 bits, the length of the beam training indication field of the user N may be 1 bit, the length of the channel access indication field for the user N may be 2 bits, the length of the link ID field of the second link(s) corresponding to the user N may be 4 bits, and the length of the AID field corresponding to the user N may be 2 bytes.

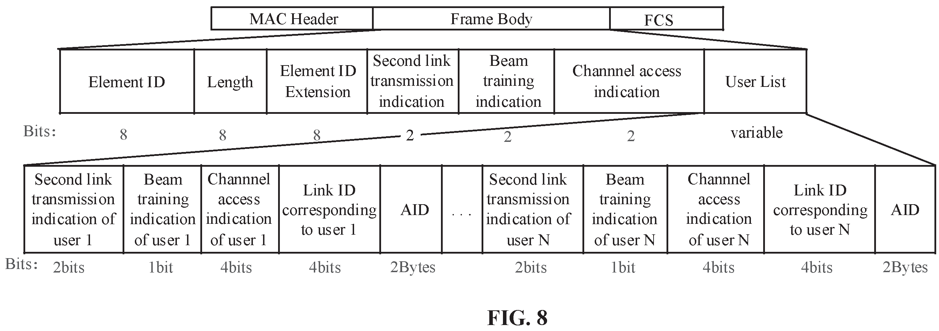

Taking the second frame in PS mode as an example, FIG. 8 is a schematic diagram of a frame structure of a beacon frame applicable to the second frame in the embodiment of the present application. Referring to FIG. 8, the frame structure of the beacon frame may include a MAC header, a frame body, and an FCS. A second link management element field may be added to the frame body. Accordingly, the frame body of the beacon frame may include one or more of the following fields: an element ID field, a length field, an element ID extension field, or a second link management element field.

In some implementations, the second link management element field may include one or more of the following fields: a beam training indication field of user N, a channel access indication field of user N, link ID of second link(s) corresponding to the user N, or AID corresponding to the user N. N is a positive integer greater than or equal to 1.

For example, when the value of the second link transmission indication field is 0, it indicates that the second link(s) is in a sleep mode in an available mode. When the value of the second link transmission indication field is 1, it indicates that the second link(s) is in an active mode in an available mode. When the value of the second link transmission indication field is 2, it indicates that the second link(s) is in an unavailable mode. In the embodiment of the present application, a value greater than 2 may be set as the reserved value of the field.

For example, when the value of the beam training indication field is 0, it indicates not performing beam training for the beam(s) in the second link(s). When the value of the beam training indication field is 1, it indicates performing beam training for the beam(s) in the second link(s). In the embodiment of the present application, a value greater than 1 may be set as the reserved value of the field.

For example, when the value of the channel access indication field is 0, it indicates that the channel access mode of assistance of the first link(s) is adopted. When the value of the channel access indication field is 1, it indicates that the second link independent access mode in the STR mode is adopted. When the value of the channel access indication field is 2, it indicates that the second link independent access mode in the NSTR mode is adopted. In the embodiment of the present application, a value greater than 1 may be set as the reserved value of the field.

t should be noted that, if the PS-POLL frame only need to carry a first field corresponding to one user, or the contents of the first fields corresponding to a plurality of users carried by the PS-POLL frame are the same, in this case, the first field may be carried in the second link transmission indication field, the beam training indication field, and the channel access indication field in the link information field, and it is not necessary to carry the above information in each field in the user list. In this case, the user list may only carry the link ID of the second link(s) corresponding to each user and/or the AID corresponding to each user. Of course, in the above scenario, the first field corresponding to each user may be included in the user list. In this case, the second link transmission indication field, the beam training indication field, and the channel access indication field in the link information field may be set as reserved values. For example, in the link information field, the value of the second link transmission indication field may be a reserved value 3, the value of the beam training indication field may be a reserved value 2, and the value of the channel access indication field may be a reserved value 4.

If the contents of the first fields corresponding to a plurality of users carried by the PS-POLL frame are partially or completely different, in this case, the first fields corresponding to various users may be carried in the user list field, and in this case, the second link transmission indication field, the beam training indication field, and the channel access indication field in the link information field may be set as reserved values. That is, if the second link transmission indication field, the beam training indication field, and the channel access indication field in the link information field are reserved values, it indicates that first fields corresponding to different users (that is, non-AP MLD) are carried in the PS-POLL frame. For example, in the link information field, the value of the second link transmission indication field may be a reserved value 3, the value of the beam training indication field may be a reserved value 2, and the value of the channel access indication field may be a reserved value 4.

In the embodiment of the present application, the length of each field in the PS-POLL frame is not limited. In order to facilitate understanding, an example of the length of each field in the embodiments of the present application is described below with reference to FIG. 8. Referring to FIG. 8, the length of the element ID field may be 8 bits. The length of the length field may be 1 bit. The length of the element ID extension field may be 1 bit. The length of the second link transmission indication field may be 2 bits. The length of the beam training indication field may be 2 bits. The length of the channel access indication field may be 2 bits. The length of the user list field may be a variable length. In the user list field, the length of the second link transmission indication field for user N may be 2 bits, the length of the beam training indication field for user N may be 1 bit, the length of the channel access indication field for user N may be 2 bits, the length of the link ID field of the second link(s) corresponding to the user N may be 4 bits, the length of the AID field corresponding to the user N may be 2 bytes.

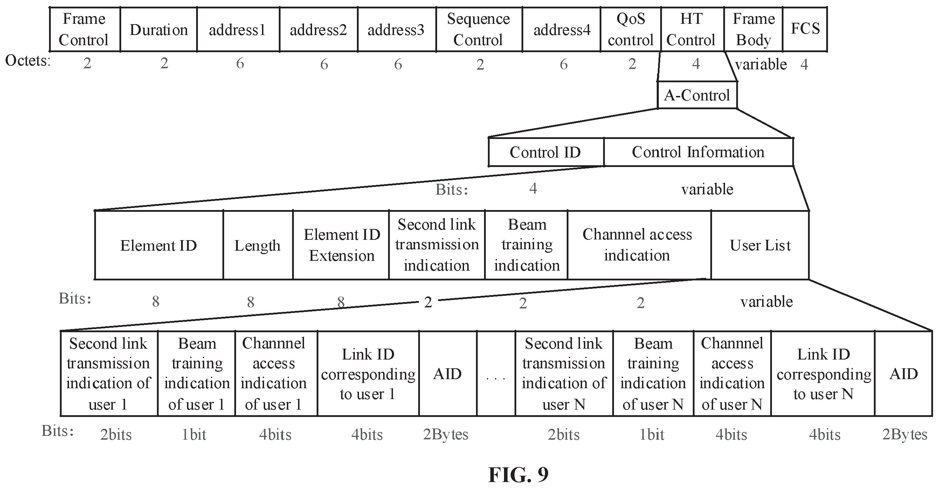

It should be noted that, in some scenarios, the second link management element field newly added in the PS-POLL frame described in FIG. 8 may also be carried in the data frame. Referring to FIG. 9, the second link management element field may be carried in control information in a data frame (also referred to as a downlink data frame). The related introduction of the second link association element field can be referred to the above description, and the description thereof is not repeated here for the sake of brevity.

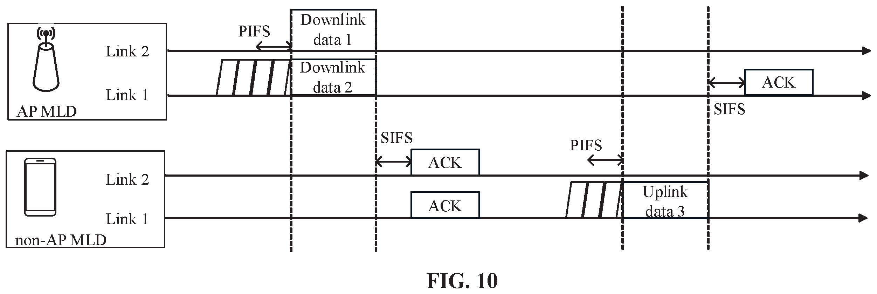

The frame structures according to the embodiments of the present application have been described above with reference to FIGs. 1 to 9. For example, in the above description of the access modes of the second link(s), the access modes in which the first link(s) assists in accessing the second link(s) is introduced, and the access modes proposed in the embodiments of the present application will be described below with reference to FIG. 10.

In some implementations, the above step S210 may include that the MLD manages channel access of the second link(s) by using the first link(s).

In some implementations, the operation that AP MLD manages channel access of the second link(s) by using the first link(s) includes the AP MLD determines whether the channel of the frequency band corresponding to the second link(s) is idle in the frequency band corresponding to the first link(s).

In the embodiment of the present application, the method of determining whether the frequency band corresponding to the second link(s) is idle is not limited. In some implementations, the AP MLD may determine, based on the signal energy of a signal transmitted in the second link(s), whether a frequency band corresponding to the second link(s) is idle. For example, the AP MLD may determine whether the second link(s) is idle by measuring signal energy in the second link(s). Generally, a second link may be determined to be busy if the signal energy in the second link is greater than a threshold. If the signal energy in a second link is less than or equal to a threshold, the second link may be determined to be idle.

Compared with the conventional method in which it is necessary to scan all frequency bands of the second link(s) to determine whether the second link(s) is idle, it is possible, in the embodiment of the present application, to determine whether the second link(s) is idle by measuring the signal energy in the second link(s), which is helpful to reduce the power consumption speed of the MLD, especially when the second link(s) is millimeter wave link(s), the frequency band range of the millimeter wave link(s) is usually large, and if the entire frequency band of the millimeter wave link(s) is scanned, a large amount of power is usually required.

In some implementations, if the AP MLD successfully contends for a channel on the frequency band corresponding to the first link(s), and the frequency band corresponding to the second link(s) is idle for a period before the successful contention of the frequency band corresponding to the first link(s), the AP MLD determines that the channel of the frequency band corresponding to the second link(s) is idle.

In the embodiment of the present application, the time length of the above mentioned period is not limited, and for example, the period may be a priority inter-frame spacing (PIFS). Of course, in the embodiment of the present application, the period may be a duration of any other arbitrary time length.

In some implementations, the above method further includes: if the AP MLD determines that a channel of a frequency band corresponding to the second link(s) is idle, the AP MLD cooperatively transmits on the first link(s) and the second link(s). Of course, in the embodiment of the present application, if the channel of the frequency band corresponding to the second link(s) is idle, the transmission may be performed only on the second link(s).

In some implementations, the above method further includes: if the AP MLD determines that a channel of a frequency band corresponding to the second link(s) is busy, the AP MLD transmits on the first link(s).

It should be noted that the above operation that the AP MLD determines whether the frequency band corresponding to the second link(s) is idle can be applied to a scenario in which there is downlink data to be transmitted with the AP MLD. Accordingly, in the scenario in which there is uplink data to be transmitted by the non-AP MLD, the AP MLD may determine whether the frequency band corresponding to the second link(s) is idle. Of course, in the embodiment of the present application, the scenario in which the AP MLD determines whether the frequency band corresponding to the second link(s) is idle is not limited.

In some implementations, the above step S210 may include that the first non-AP MLD may manage the second link(s) by using the first link(s). For example, the first non-AP MLD may manage channel access of the second link(s) by using the first link(s).

In some implementations, managing channel access of the second link(s) by using first link(s) may include the first non-AP MLD determines whether the channel of the frequency band corresponding to the second link(s) is idle in the frequency band corresponding to the first link(s).

In the embodiment of the present application, the method of determining whether the frequency band corresponding to the second link(s) is idle is not limited. In some implementations, the first non-AP MLD may determine whether a frequency band corresponding to the second link(s) is idle based on signal energy of signal(s) transmitted in the second link(s). For example, the first non-AP MLD may determine whether the second link is idle by measuring signal energy in the second link(s). Generally, a second link may be determined to be busy (or occupied) if the signal energy in the second link is greater than a threshold. If the signal energy in a second link is less than or equal to a threshold, the second link may be determined to be idle.

In some implementations, if the first non-AP MLD successfully contends for a channel on the frequency band corresponding to the first link(s), and the frequency band corresponding to the second link(s) is idle for a period before the successful contention of the frequency band corresponding to the first link(s), the first non-AP MLD determines that the channel of the frequency band corresponding to the second link(s) is idle.

In the embodiment of the present application, the length of the above mentioned period is not limited, and for example, the period may be PIFS. Of course, in the embodiment of the present application, the period may be a duration of any other arbitrary time length.

In some implementations, the above method further includes: if the first non-AP MLD determines that a channel of a frequency band corresponding to the second link(s) is idle, the first non-AP MLD cooperatively transmits on the first link and the second link. Of course, in the embodiment of the present application, if the channel of the frequency band corresponding to the second link(s) is idle, the transmission may be performed only on the second link(s).

In some implementations, the method further includes: if the first non-AP MLD determines that a channel of a frequency band corresponding to the second link(s) is busy, the first non-AP MLD transmits on the first link(s).

In order to facilitate understanding, the second link access method assisted by the first link(s) in the embodiment of the present application will be described below with reference to FIG. 10. Referring to FIG. 10, the AP MLD and the non-AP MLD may communicate through two links: link 1 and link 2. Link 2 is a millimeter wave link with a frequency of 60 GHz. Link 1 is a low frequency link with a frequency of 2.4 GHz.

In the process of downlink data transmission, assuming that the AP MLD successfully contends for the channel in the frequency band corresponding to the link 1 and can transmit the downlink data 1 through the link 1, in this case, when the backoff counter of the link 1 is decremented to 0, the AP MLD can check whether the link 2 is idle in the PIFS before transmitting the downlink data 1. When link 2 is idle, the AP MLD can transmit downlink data 1 and downlink data 2 through link 1 and link 2, respectively. Accordingly, if the downlink data 1 transmitted in the link 1 is successfully received by the non-AP MLD, then after an interval of short interframe space (SIFS), the non-AP MLD may feed back an ACK to the AP MLD through the link 1. If the data 2 transmitted in the link 2 is successfully received by the non-AP MLD, then after an interval of SIFS, the non-AP MLD may feed back an ACK to the AP MLD through the link 2.

In the process of uplink data transmission, assuming that the non-AP MLD successfully contends for the channel in the frequency band corresponding to the link 1 and can transmit the uplink data 3 through the link 1, in this case, when the backoff counter of the link 1 is decremented to 0, the non-AP MLD can check whether the link 2 is idle in the PIFS before transmitting the uplink data 1, and if the link 2 is busy, the AP MLD can transmit the uplink data 3 through the link 1. Accordingly, if the uplink data 1 transmitted in the link 1 is successfully received by the AP MLD, at the after an interval of SIFS, the AP MLD may feed back an ACK to the non-AP MLD through the link 1.

In some scenarios, a communication system may include multiple types of communication devices, some communication devices may support communication in a frequency band corresponding to the second link(s), and some communication devices may not support communication in a frequency band corresponding to the second link(s). For a communication device that does not support communication in a frequency band corresponding to the second link(s), it is meaningless to perform the access method of the second link(s) described above or to transmit a frame for managing the second link(s), which may lead to an increase in overhead of the communication system.

Therefore, the embodiment of the present application provides an interactive mode of capability information, in which the communication device informs other communication devices whether it supports communication in the frequency band corresponding to the second link(s), which helps to avoid unnecessary second link access procedures and/or transmission of the frame for managing the second link(s). Therefore, the capability information is also referred to as "capability information of the second link", or the capability information corresponds to the second link.

In the embodiment of the present application, the communication device may be an AP MLD, and accordingly, the other communication device may be non-AP MLD, that is, the capability information is notified by the AP MLD. Alternatively, the communication device may be a non-AP MLD, and accordingly, the other communication device may be AP MLD, that is, the capability information is informed by the non-AP MLD. Furthermore, what kind of communication link is used when a communication device interacts with other communication devices for capability information is an urgent problem to be solved.

Therefore, in view of the above problem, the embodiment of the present application further proposes that the first link(s) may be used to determine whether the first non-AP MLD supports communication in the frequency band corresponding to the second link(s), or the first link(s) may be used to determine whether the AP MLD supports communication in the frequency band corresponding to the second link(s). Examples 1 and 2 are described below in conjunction with each other.

**Example 1:** the operation that the AP MLD determines whether the first non-AP MLD supports communication in a frequency band corresponding to the second link(s) by using the first link(s) may include the AP MLD determines whether the first non-AP MLD supports communication in a frequency band corresponding to the second link(s) by using the first link(s).

In some implementations, the operation that the AP MLD determines whether the first non-AP MLD supports communication in a frequency band corresponding to the second link(s) by using the first link(s) includes: the AP MLD receives a third frame sent by the first non-AP MLD on the first link(s). The third frame is used to indicate whether the first non-AP MLD supports communication in a frequency band corresponding to the second link(s), or the third frame is used to indicate the above capability information.

In some scenarios, after receiving the third frame, the AP MLD may also send a response frame of the third frame through the first link(s) to indicate capability information of the AP MLD. That is, the above method further includes: the AP MLD sends the response frame of the third frame to the first non-AP MLD on the first link(s). The response frame of the third frame is used to indicate whether the AP MLD supports communication in a frequency band corresponding to the second link(s). Of course, in the embodiment of the present application, the response frame of the third frame may only be used to indicate whether the AP MLD has successfully received the third frame.

In addition, it should be further noted that, when the third frame indicates that the first non-AP MLD does not support communication in the frequency band corresponding to the second link(s), in this case, even if the AP MLD supports communication in the frequency band corresponding to the second link(s), the first non-AP MLD cannot communicate with the AP MLD through the second link(s). Therefore, in this case, in order to reduce the overhead of transmitting the response frame of the third frame, the AP MLD may not transmit the response frame of the third frame. Of course, in the embodiment of the present application, if the above problems are not considered, in a case where the first non-AP MLD does not support communication in the frequency band corresponding to the second link(s), the AP MLD may continue to transmit the response frame of the third frame.

In an embodiment of the present application, the third frame and/or the response frame of the third frame are not limited. For example, the third frame is a probe request frame. Accordingly, the response frame of the third frame is a probe response frame.

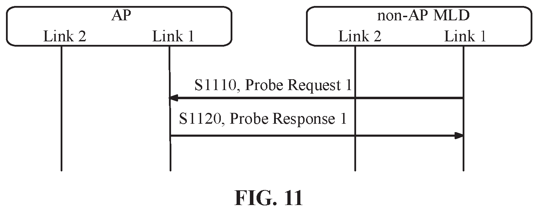

In order to facilitate understanding, a schematic flow chart of interaction of capability information in the embodiment of the present application will be described below with reference to FIG. 11. The method illustrated in FIG. 11 includes steps S1110 to S1120. It is assumed that communication can be performed between the non-AP MLD and the AP MLD based on the link 1 and the link 2. The frequency band corresponding to the link 1 is 2.4 GHz, and the frequency band corresponding to the link 2 may be 60 GHz.

In step S1110, the non-AP MLD sends a probe request 1 to the AP MLD via the link 1. The probe request 1 is used to indicate whether the non-AP MLD supports communication in the frequency band corresponding to the second link(s).

In step S1120, the AP MLD sends a probe response 1 to the non-AP MLD through the link 1. The probe response 1 is used to indicate whether the AP MLD supports communication in the frequency band corresponding to the second link.

**Example 2:** the operation that the AP MLD determines whether the first non-AP MLD supports communication in a frequency band corresponding to the second link(s) by using the first link(s) may include that the AP MLD sends a fourth frame to one or more non-AP MLDs on the first link(s). The fourth frame is used to indicate whether the AP MLD supports communication in a frequency band corresponding to the second link(s). If the first non-AP MLD supports communication in the frequency band corresponding to the second link(s), the AP MLD receives a fifth frame sent by the first non-AP MLD. The fifth frame is used to request the AP MLD to transmit on the frequency band corresponding to the second link(s).

In some implementations, the fourth frame is broadcast by the AP MLD on the first link(s). For example, the fourth frame may be a beacon frame.

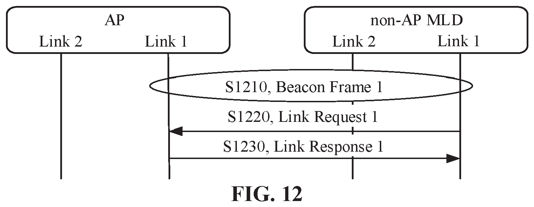

In order to facilitate understanding, a schematic flowchart of interactive capability information in another embodiment of the present application will be described below with reference to FIG. 12. The method illustrated in FIG. 12 includes steps S1210 to S1220. It is assumed that communication can be performed between the non-AP MLD and the AP MLD based on the link 1 and the link 2. The frequency band corresponding to the link 1 is 2.4 GHz, and the frequency band corresponding to the link 2 may be 60 GHz.

In step S1210, the AP MLD broadcasts a beacon frame 1 over the link 1. The beacon frame 1 is used to indicate whether the AP MLD supports communication in a frequency band corresponding to the second link(s).

In step S1220, if the non-AP MLD 1 supports communication in the frequency band corresponding to the second link, the non-AP MLD 1 sends a link request 1 to the AP MLD through the link 1. The link request 1 is used to indicate the non-AP MLD 1 supports communication in the frequency band corresponding to the second link(s).

In step S 1230, the AP MLD sends a link response 1 to the non-AP MLD 1 through the link 1.

The method flow of interaction of capability information in the embodiment of the present application has been described above with reference to FIGs. 11 to 12. Hereinafter, a frame structure of a frame for carrying capacity information provided by an embodiment of the present application will be described.

In some implementations, a field may be newly added to the frame body to carry information for indicating whether communication based on the second frequency band is supported. Taking the second link(s) being millimeter wave link as an example, this field may be called directional multi-gigabit (DMG) support (DMG Support) field. In some implementations, this field may be a second link capability element.

In some implementations, when the value of the above field is the first value, it indicates that communication based on the second link(s) is supported. When the value of the above field is the second value, it indicates that communication based on the second link(s) is not supported. The first value and the second value are different values, for example, the first value may be 1, and the second value may be 0. For another example, the first value may be 0, and the second value may be 1.

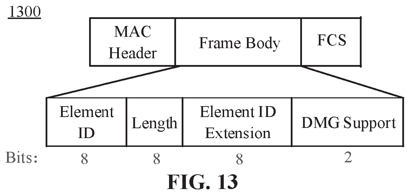

In order to facilitate understanding, a frame structure of a frame used for transmitting capability information in the embodiment of the present application will be described below with reference to FIG. 13. Referring to FIG. 13, the frame structure 1300 may include a MAC header, a frame body, and an FCS. The frame body may include one or more of the following fields: an element ID field, a length field, an element ID extension field, or a DMG support field. The DMG support field is used to carry information indicating whether communication based on the second link(s) is supported. If the value of this field is 1, it indicates that communication based on the second link(s) is supported. If the value of this field is 0, it indicates that communication based on the second link(s) is not supported. In addition, a value greater than 1 may be set as the reserved value.

In the embodiments of the present application, the values of the other fields are not limited. In some implementations, the values of the element ID field and the element ID extension field may be reserved values, so as to indicate that the frame carries the above capability information. For example, the value of the element ID field may be reserved value 255. The value of the element ID extension field may be reserved value 98. Of course, in the embodiment of the present application, the values of the above two fields may be other reserved values.

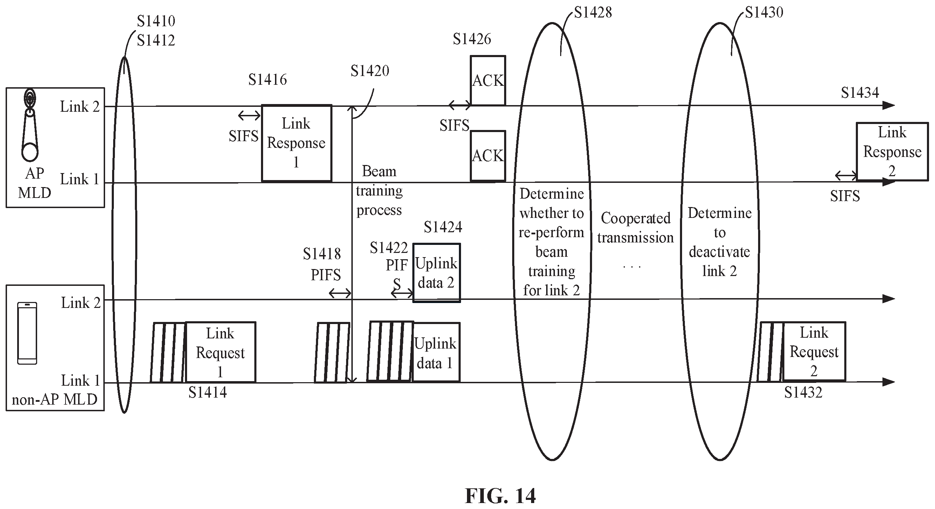

In the embodiment of the present application, the access method of the second link(s) and the trigger method of managing the second link(s) described above may be used separately, or the access method of the second link(s) and the trigger method of managing the second link(s) described above may be used in combination with each other. In order to facilitate understanding, the scheme of the embodiment of the present application will be described below with reference to FIGs. 14 to 18.

FIG. 14 is a flowchart of a method of managing the second link(s) based on a trigger manner 1 in an embodiment of the present application. In the method illustrated in FIG. 14, interaction may be performed through a link request and a link response. It should be understood that the frame structures of the link request and the link response can be referred to the above description. Of course, the link request and the link response applicable to the embodiments of the present application may also have other frame structures, and the embodiments of the present application are not limited thereto. The method illustrated in FIG. 14 includes steps S1410 to S1434.

It is assumed that communication can be performed between the non-AP MLD and the AP MLD based on the link 1 and the link 2. The frequency band corresponding to the link 1 is 2.4 GHz, and the frequency band corresponding to the link 2 may be 60 GHz.

In step S1410, the non-AP MLD and the AP MLD determine, based on the interaction of the capability information, that both of them have the capability of communication based on the link 2.

In some implementations, the interaction of the capability information described above may adopt the method described above in connection with FIG. 11 or FIG. 12, and will not be described herein for the sake of brevity.

In some implementations, if both the non-AP MLD and the AP MLD have the capability of communication based on link 2, a multi-link connection may be established. In the process of establishing a multi-link connection, link 1 and link 2 may be associated. In this case, link 2 may be in the sleep mode in the available mode.

In step S1412, the non-AP MLD determines to activate or deactivate the link 2 based on the first strategy.

In some implementations, the first strategy is determined based on the traffic volume of the traffic to be transmitted. For example, the first strategy indicates that if the traffic volume of the traffic to be transmitted is greater than the threshold value 1, it is determined to activate link 2. For another example, the first strategy indicates that if the traffic volume of the traffic to be transmitted is less than or equal to the threshold value 2, it is determined to deactivate the link 2.

In some implementations, if the non-AP MLD determines to activate link 2, step S 1412 is performed.

In step S1414, the non-AP MLD sends a link request 1 to the AP MLD on the link 1. The link request 1 carries the first indication information.

In some implementations, the first indication information includes indication information of activating link 2, identification information of link 2, indication information of the access mode of the link 2, and indication information of performing beam training for link 2.

In step S1416, after an interval of SIFS, the AP MLD sends a link response 1 to the non-AP MLD on the link 1. The link response 1 may include: indication information for indicating that the activation of the link 2 is allowed, identification information of link 2, indication information for indicating that the access mode of the link 2 is allowed to be used, and indication information for indicating that beam training for link 2 is allowed.

In step S 1418, the non-AP MLD checks whether the link 2 is idle in the PIFS. The manner in which the non-AP MLD checks whether the link 2 is idle in the PIFS can be referred to the above description, and will not be described here for the sake of brevity.

In some implementations, if link 2 is idle, step S1420 is performed. It should be understood that if link 2 is busy, the non-AP MLD may continue to determine whether link 2 is idle after a period of time, until link 2 is idle.

In step S1420, the non-AP MLD and the AP MLD perform a beam training process for the link 2 with the assistance of the link 1.

In some implementations, the process of performing beam training for the link 2 with the assistance of the link 1 may be understood as transmitting control information related to the beam training through the link 1, and the signal for the beam training may be sent through a beam corresponding to the link 2.

In some implementations, the above mentioned beam training process may include a sector-level sweep (SLS) phase and/or a beam refinement protocol (BRP) phase. Generally, after the beam training is completed, the two communicating parties can communicate directionally through the directional beam(s).

In step S1422, the non-AP MLD checks whether the link 2 is idle in the PIFS. The manner in which the non-AP MLD checks whether the link 2 is idle in the PIFS can be referred to the above description, and will not be described here for the sake of brevity.

In some implementations, if link 2 is idle, step S1424 is performed. It should be understood that if link 2 is busy, the non-AP MLD may continue to determine whether link 2 is idle after a period of time, until link 2 is idle.

In step S1424, after an interval of SIFS, the non-AP MLD sends the uplink data 1 and the uplink data 2 to the AP MLD via the link 1 and the link 2.

In step S1426, after an interval of SIFS, the AP MLD sends an ACK to the non-AP MLD via the link 1 and the link 2, respectively.

In some implementations, before deactivating the link 2, the cooperated transmission between the AP MLD and the non-AP MLD may be performed via link 1 and link 2. Of course, in the embodiment of the present application, transmission between the AP MLD and the non-AP MLD may be performed only through the link 2, and the embodiment of the present application does not limit this.

In step S1428, based on the link information, it is determined whether to re-perform beam training for the link 2.

In some implementations, the above step S1428 may be determined by the AP MLD and/or the non-AP MLD, and the embodiments of the present application are not limited thereto.

In some implementations, if the link information indicates that the link quality is good, beam training is not re-performed for the link 2. If the link information indicates that the link quality is poor, beam training is re-performed for link 2.

In step S1430, the non-AP MLD determines to deactivate the link 2 based on the first strategy.

For example, the first strategy indicates that if the traffic volume of the traffic to be sent is less than or equal to the threshold value 2, it is determined to deactivate the link 2.

In step S1432, the non-AP MLD sends a link request 2 to the AP MLD via the link 1. The link request 2 is used for requesting deactivation of the link 2.

In step S 1434, after an interval of SIFS, the AP MLD sends a link response 2 to the non-AP MLD via the link 1. The link response 2 is used to indicate that the deactivation of the link 2 is allowed.

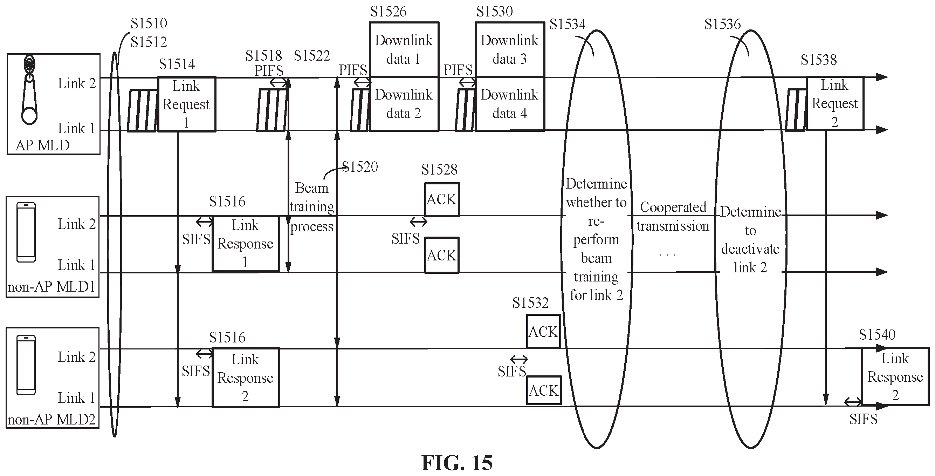

FIG. 15 is a flowchart of a method of managing the second link(s) based on a trigger manner 2 in an embodiment of the present application. In the method illustrated in FIG. 15, interaction may be performed through a link request and a link response. It should be understood that the frame structures of the link request and the link response can be referred to the above description. Of course, the link request and the link response applicable to the embodiments of the present application may also have other frame structures, and the embodiments of the present application are not limited thereto. The method illustrated in FIG. 15 includes steps S1510 to S1540.

It is assumed that communication may be performed among the non-AP MLD1, the non-AP MLD2 and the AP MLD based on the link 1 and the link 2. The frequency band corresponding to the link 1 may be 2.4 GHz, and the frequency band corresponding to the link 2 may be 60 GHz.

In step S1510, the non-AP MLD 1 and the AP MLD determine, based on the interaction between them, that both of them have the capability to communicate based on the link 2, and the non-AP MLD 2 and the AP MLD determine, based on the interaction between them, that both of them have the capability to communicate based on the link 2.

In some implementations, the interaction of the capability information described above may adopt the method described above in connection with FIG. 11 or FIG. 12, and will not be described herein for the sake of brevity.

In some implementations, if both the non-AP MLD 1 and the AP MLD have the capability to communicate based on link 2, a multi-link connection may be established. In the process of establishing a multi-link connection, link 1 and link 2 may be associated. In this case, link 2 may be in the sleep mode in the available mode. If both the non-AP MLD 2 and the AP MLD have the capability to communicate based on link 2, a multi-link connection may be established. In the process of establishing a multi-link connection, link 1 and link 2 may be associated. In this case, link 2 may be in a sleep mode in the available mode.

In step S1512, the AP MLD determines, based on the first strategy, to activate the link 2 corresponding to the non-AP MLD1 and the link 2 corresponding to the non-AP MLD2.

In some implementations, the first strategy is determined based on the traffic volume of the traffic to be transmitted. For example, the first strategy indicates that if the traffic volume of the traffic to be transmitted is greater than the threshold value 1, it is determined to activate link 2. For another example, the first strategy indicates that if the traffic volume of the traffic to be transmitted is less than or equal to the threshold value 2, it is determined to deactivate the link 2.

In some implementations, if the non-AP MLD 1 determines to activate link 2, step S1512 is performed.

In step S1514, the AP MLD sends a link request 1 on the link 1, and the link request 1 carries the first field.

In some implementations, the first field includes the following information: indication information indicating activation of the second link(s) corresponding to the non-AP MLD1 and the non-AP MLD2, identification information of the second link(s) corresponding to the non-AP MLD1 and the non-AP MLD2, identification information of the non-AP MLD1 and the non-AP MLD2, indication information of an access mode of the second link(s) corresponding to the non-AP MLD 1 and the non-AP MLD 2, indication information of performing beam training for the second link(s) corresponding to the non-AP MLD1 and the non-AP MLD2.

In step S1516, after an interval of SIFS, the non-AP MLD 1 and the non-AP MLD 2 send the link response 1 and the link response 2 to the AP MLD through the link 1, respectively. The link response 1 and the link response 2 may include: indication information for indicating that the link 2 is allowed to be activated, identification information of link 2, indication information for indicating that the access mode of the link 2 is allowed to be used, indication information for indicating that beam training for link 2 is allowed.

In step S 1518, the AP MLD checks whether the link 2 is idle in the PIFS. The manner in which the AP MLD checks whether the link 2 is idle in the PIFS can be referred to the above description, and will not be described here for the sake of brevity.

In some implementations, if link 2 is idle, step S1520 is performed. It should be understood that if link 2 is busy, the non-AP MLD may continue to determine whether link 2 is idle after a period of time, until link 2 is idle.

In step S1520, the non-AP MLD 1 and the AP MLD perform a beam training process for the link 2 with the assistance of the link 1. The non-AP MLD2 and the AP MLD perform a beam training process for link 2 with the assistance of link 1.

In some implementations, the process of performing beam training for the link 2 with the assistance of the link 1 may be understood as transmitting control information related to the beam training through the link 1, and the signal for the beam training may be sent through a beam corresponding to the link 2.

In some implementations, the above-described beam training process may include an SLS phase and/or a BRP phase. Generally, after the beam training is completed, the two communicating parties can communicate directionally through the directional beam(s).

In step S1522, the AP MLD checks whether the link 2 is idle in the PIFS. The manner in which the AP MLD checks whether the link 2 is idle in the PIFS can be described above, and will not be described here for the sake of brevity.

In some implementations, if link 2 is idle, step S1526 is performed. It should be understood that if link 2 is busy, the non-AP MLD may continue to determine whether link 2 is idle after a period of time, until link 2 is idle.

In step S1526, after an interval of SIFS, the AP MLD sends the downlink data 1 and the downlink data 2 to the non-AP MLD 1 through the link 1 and the link 2.

In step S1528, after an interval of SIFS, the non-AP MLD 2 sends an ACK to the AP MLD through the link 1 and the link 2, respectively.

In some implementations, before deactivating link 2, cooperative transmission may be performed between both the AP MLD and the non-AP MLD 1 via link 1 and link 2. Of course, in the embodiment of the present application, transmission between both the AP MLD and the non-AP MLD 1 may be performed only through the link 2, and the embodiment of the present application does not limit this.

In step S1530, after an interval of SIFS, the AP MLD sends the downlink data 3 and the downlink data 4 to the non-AP MLD 2 via the link 1 and the link.

In step S1532, after an interval of SIFS, the non-AP MLD 2 sends an ACK to the AP MLD through the link 1 and the link 2, respectively.

In some implementations, before deactivation of the link 2, cooperative transmission may be performed between both the AP MLD and the non-AP MLD 2 via link 1 and link 2. Of course, in the embodiment of the present application, transmission between both the AP MLD and the non-AP MLD 2 may be performed only through the link 2, and the embodiment of the present application does not limit this.

In step S1534, whether to re-perform beam training for the link 2 is determined based on the link information.

In some implementations, the above step S1534 may be determined by one or more of the AP MLD, the non-AP MLD 1, and the non-AP MLD 2, and the embodiments of the present application are not limited thereto.

In some implementations, if the link information indicates that the link quality is good, beam training is not re-performed for the link 2. If the link information indicates that the link quality is poor, beam training is re-performed for link 2.

In step S1536, the AP MLD determines to deactivate the link 2 corresponding to the non-AP MLD 2 based on the first strategy.

For example, the first strategy indicates that if the traffic volume of the traffic to be sent is less than or equal to the threshold value 2, it is determined to deactivate the link 2. Accordingly, if the traffic volume of the traffic to be transmitted of the non-AP MLD 2 is less than the threshold value 2, it is determined that the link 2 corresponding to the non-AP MLD 2 is deactivated.

In step S1538, the AP MLD sends a link request 2 to the non-AP MLD 2 through the link 1. The link request 2 is used to request deactivating the link 2 corresponding to the non-AP MLD 2.

It should be noted that the first field(s) corresponding to other non-AP MLD(s) (for example, non-AP MLD3) may be carried in the link request 2, and the embodiment of the present application does not limit this. Of course, in the embodiment of the present application, the first field(s) corresponding to other non-AP MLD(s) may not be carried in the link request 2.

In step S1540, after an interval of SIFS, the non-AP MLD 2 sends a link response 2 to the AP MLD through the link 1. The link response 2 is used to indicate that the link 2 corresponding to the non-AP MLD 2 is allowed to be deactivated.

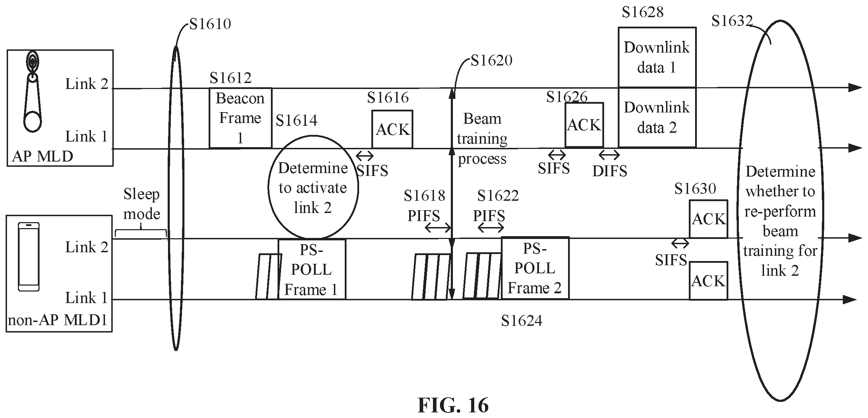

FIG. 16 is a flowchart of a method of managing the second link(s) based on a trigger manner 1 in an embodiment of the present application. The method shown in FIG. 16 can be applied to the PS mode. It should be understood that the frame structures involved in the method flow can be referred to the above description. Of course, the frame structure applicable to the embodiments of the present application may also be other frame structures, and the embodiments of the present application are not limited thereto. The method illustrated in FIG. 16 includes steps S1610 to S1632.

It is assumed that communication can be performed between the non-AP MLD and the AP MLD based on the link 1 and the link 2. The frequency band corresponding to the link 1 is 2.4 GHz, and the frequency band corresponding to the link 2 may be 60 GHz. Further, since the non-AP MLD is in the PS mode, the link 2 is in the sleep mode

In step S1610, the non-AP MLD and the AP MLD determine, based on the interaction of the capability information, that both of them have the capability of communication based on the link 2.

In some implementations, the interaction of the capability information described above may adopt the method described above in connection with FIG. 11 or FIG. 12, and will not be described herein for the sake of brevity.

In some implementations, if both the non-AP MLD and the AP MLD have the capability of communication based on link 2, a multi-link connection may be established. In the process of establishing a multi-link connection, link 1 and link 2 may be associated. In this case, link 2 may be in the sleep mode in the available mode.

In step S1612, the AP MLD broadcasts the beacon frame 1 on the link 1.

In some implementations, the beacon frame 1 is used to indicate whether there is buffer packet information corresponding to the non-AP MLD. If the non-AP MLD receives the beacon frame 1 after waking up, and checks and finds that the TIM field of the beacon frame 1 indicates that there is buffer information corresponding to itself, then step S1614 is performed.

In step S1614, the non-AP MLD determines to activate the link 2 based on the first strategy, and sends the PS-POLL frame 1 on the link 1.

In some implementations, the first strategy is determined based on the traffic volume of the traffic to be transmitted. For example, the first strategy indicates that if the traffic volume of the traffic to be transmitted is greater than the threshold value 1, it is determined to activate link 2. For another example, the first strategy indicates that if the traffic volume of the traffic to be transmitted is less than or equal to the threshold value 2, it is determined to deactivate the link 2.

In some implementations, if the non-AP MLD determines to activate the link 2, the PS-POLL frame 1 carries first indication information. The first indication information includes indication information of activation of the link 2, identification information of link 2, indication information of the access mode of the link 2, and indication information of performing beam training for link 2.

In step S1616, after an interval of SIFS, the AP MLD sends an ACK to the non-AP MLD on the link 1.

In step S1618, the non-AP MLD checks whether the link 2 is idle in the PIFS. The manner in which the non-AP MLD checks whether the link 2 is idle in the PIFS can be referred to the above description, and will not be described here for the sake of brevity.

In some implementations, if link 2 is idle, step S1620 is performed. It should be understood that if link 2 is busy, the non-AP MLD may continue to determine whether link 2 is idle after a period of time, until link 2 is idle.

In step S1620, the non-AP MLD and the AP MLD perform a beam training process for the link 2 with the assistance of the link 1.

In some implementations, the process of performing beam training for the link 2 with the assistance of the link 1 may be understood as transmitting control information related to the beam training through the link 1, and the signal for the beam training may be sent through a beam corresponding to the link 2.

In some implementations, the above-described beam training process may include an SLS phase and/or a BRP phase. Generally, after the beam training is completed, the two communicating parties can communicate directionally through the directional beam(s).

In step S1622, the non-AP MLD checks whether the link 2 is idle in the PIFS. The manner in which the non-AP MLD checks whether the link 2 is idle in the PIFS can be referred to the above description, and will not be described here for the sake of brevity.

In some implementations, if link 2 is idle, step S1624 is performed. It should be understood that if link 2 is busy, the non-AP MLD may continue to determine whether link 2 is idle after a period of time, until link 2 is idle.

In step S1624, the non-AP MLD sends the PS-POLL frame 2 to the AP MLD through the link 1 to trigger the AP MLD to send downlink data.

In step S1626, after an interval of SIFS, the AP MLD sends an ACK to the non-AP MLD through link 1.

In step S1628, after an interval of SIFS, the AP MLD sends the downlink data 1 and the downlink data 2 to the non-AP MLD via the link 1 and the link 2.

In step S1630, after an interval of SIFS, the non-AP MLD sends an ACK to the non-AP MLD via the link 1 and the link 2, respectively.

In some implementations, before deactivating the link 2, the cooperated transmission between the AP MLD and the non-AP MLD may be performed via link 1 and link 2. Of course, in the embodiment of the present application, transmission between the AP MLD and the non-AP MLD may be performed only through the link 2, and the embodiment of the present application does not limit this.

In step S1632, whether to re-perform beam training for the link 2 is determined based on the link information.

In some implementations, the above step S1632 may be determined by the AP MLD and/or the non-AP MLD, and the embodiments of the present application are not limited thereto.

In some implementations, if the link information indicates that the link quality is good, beam training is not re-performed for the link 2. If the link information indicates that the link quality is poor, beam training is re-performed for link 2.

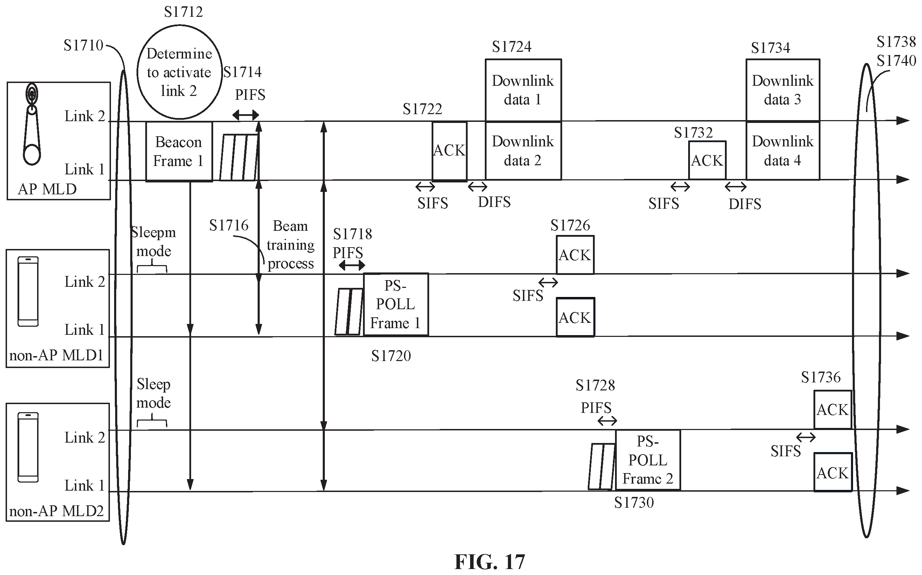

FIG. 17 is a flowchart of a method of managing the second link(s) based on a trigger manner 2 in an embodiment of the present application. The method shown in FIG. 17 can be applied to the PS mode. It should be understood that the frame structures involved in the method flow can be referred to the above description. Of course, the frame structure applicable to the embodiments of the present application may also be other frame structures, and the embodiments of the present application are not limited thereto. The method illustrated in FIG. 17 includes steps S1710 to S1734.

It is assumed that communication can be performed between the non-AP MLD 1 and the AP MLD based on the link 1 and the link 2, and that communication can be performed between the non-AP MLD 2 and the AP MLD based on the link 1 and the link 2. The frequency band corresponding to the link 1 may be 2.4 GHz, and the frequency band corresponding to the link 2 may be 60 GHz. In addition, since the non-AP MLD1 and the non-AP MLD2 are in the PS mode, the link 2 corresponding to the non-AP MLD1 and the non-AP MLD2 is in the sleep mode.

In step S1710, the non-AP MLD 1 and the AP MLD determine, based on the interaction between them, that both of them have the capability to communicate based on the link 2, and the non-AP MLD 2 and the AP MLD determine, based on the interaction between them, that both of them have the capability to communicate based on the link 2.

In some implementations, the interaction of the capability information described above may adopt the method described above in connection with FIG. 11 or FIG. 12, and will not be described herein for the sake of brevity.

In some implementations, if both the non-AP MLD 1 and the AP MLD have the capability to communicate based on link 2, a multi-link connection may be established. In the process of establishing the multi-link connection, the link 1 and the link 2 may be associated, and in this case, the link 2 corresponding to the non-AP MLD 1 may be in a sleep mode in the available mode. If both the non-AP MLD 2 and the AP MLD have the capability to communicate based on link 2, a multi-link connection may be established. In the process of establishing the multi-link connection, the link 1 and the link 2 may be associated. In this case, the link 2 corresponding to the non-AP MLD 2 may be in a sleep mode in the available mode.

In step S1712, the AP MLD determines to activate the link 2 corresponding to the non-AP MLD1 and the non-AP MLD2 based on the first strategy, and the AP MLD broadcasts the beacon frame 1 on the link 1.

In some implementations, the first strategy is determined based on the traffic volume of the traffic to be transmitted. For example, the first strategy indicates that if the traffic volume of the traffic to be transmitted is greater than the threshold value 1, it is determined to activate link 2. For another example, the first strategy indicates that if the traffic volume of the traffic to be transmitted is less than or equal to the threshold value 2, it is determined to deactivate the link 2.

In some implementations, if the AP MLD determines to activate the links 2 corresponding to the non-AP MLD1 and the non-AP MLD2, the PS-beacon frame 1 carries first indication information, and the first indication information includes indication information of activation of the links 2 respectively corresponding to the non-AP MLD1 and the non-AP MLD2, identification information of the links 2 respectively corresponding to the non-AP MLD1 and the non-AP MLD2, indication information of the access mode(s) of the links 2 respectively corresponding to the non-AP MLD 1 and the non-AP MLD 2, and indication information of performing beam training for the links 2 respectively corresponding to the non-AP MLD1 and the non-AP MLD2.

In some implementations, beacon frame 1 is used to indicate whether there is buffer packet information corresponding to non-AP MLD1 and non-AP MLD2. If the non-AP MLD 1 and the non-AP MLD 2 receive the beacon frame 1 after waking up, and check and find that the TIM field of the beacon frame 1 indicates that there is buffer information corresponding to them.

In step S1714, the AP MLD checks whether the link 2 is idle in the PIFS. The manner in which the AP MLD checks whether the link 2 is idle in the PIFS can be described above, and will not be described here for the sake of brevity.

In some implementations, if link 2 is idle, step S1716 is performed. It should be understood that if link 2 is busy, the non-AP MLD may continue to determine whether link 2 is idle after a period of time, until link 2 is idle.

In step S1716, the AP MLD and the non-AP MLD 1 perform a beam training process for the link 2 with the assistance of the link 1.

In some implementations, the process of performing beam training for the link 2 with the assistance of the link 1 may be understood as transmitting control information related to the beam training through the link 1, and the signal for the beam training may be sent through a beam corresponding to the link 2.

In some implementations, the above-described beam training process may include an SLS phase and/or a BRP phase. Generally, after the beam training is completed, the two communicating parties can communicate directionally through the directional beam(s).

In step S1718, the non-AP MLD 1 checks whether the link 2 is idle in the PIFS. The method in which the AP MLD checks whether the link 2 is idle in the PIFS can be referred to the above description, and will not be described here for the sake of brevity.

In some implementations, if link 2 is idle, step S1720 is performed. It should be understood that if link 2 is busy, the non-AP MLD may continue to determine whether link 2 is idle after a period of time, until link 2 is idle.

In step S1720, the non-AP MLD 1 sends the PS-POLL frame 1 to the AP MLD via the link 1 to trigger the AP MLD to send downlink data.

In step S1722, after an interval of SIFS, the AP MLD sends an ACK to the non-AP MLD through link 1.

In step S1724, after an interval of DIFS, the AP MLD sends the downlink data 1 and the downlink data 2 to the non-AP MLD 1 via the link 1 and the link 2.

In step S1726, after an interval of SIFS, the non-AP MLD 1 sends an ACK to the AP MLD via the link 1 and the link 2, respectively.

In some implementations, before deactivating link 2, cooperative transmission may be performed between both the AP MLD and the non-AP MLD 1 via link 1 and link 2. Of course, in the embodiment of the present application, transmission between both the AP MLD and the non-AP MLD 1 may be performed only through the link 2, and the embodiment of the present application does not limit this.

In step S1728, the non-AP MLD 2 checks whether the link 2 is idle in the PIFS. The method in which the AP MLD checks whether the link 2 is idle in the PIFS can be referred to the above description, and will not be described here for the sake of brevity.

In some implementations, if link 2 is idle, step S1730 is performed. It should be understood that if link 2 is busy, the non-AP MLD may continue to determine whether link 2 is idle after a period of time, until link 2 is idle.

In step S1730, the non-AP MLD 2 sends the PS-POLL frame 1 to the AP MLD via the link 1 to trigger the AP MLD to send downlink data.

In step S1732, after an interval of SIFS, the AP MLD sends an ACK to the non-AP MLD 2 through the link 1.

In step S1734, after an interval of DIFS, the AP MLD sends the downlink data 1 and the downlink data 2 to the non-AP MLD 2 via the link 1 and the link 2.

In step S1736, after an interval of SIFS, the non-AP MLD 2 sends an ACK to the AP MLD through the link 1 and the link 2, respectively.

In some implementations, before deactivation of the link 2 (see step S1740), cooperative transmission may be performed between both the AP MLD and the non-AP MLD 2 via link 1 and link 2. Of course, in the embodiment of the present application, transmission between both the AP MLD and the non-AP MLD 2 may be performed only through the link 2, and the embodiment of the present application does not limit this.

In step S1738, whether to re-perform beam training for the link 2 is determined based on the link information.

In some implementations, the above step S1738 may be determined by one or more of the AP MLD, the non-AP MLD 1, and the non-AP MLD 2, and the embodiments of the present application are not limited thereto.

In some implementations, if the link information indicates that the link quality is good, beam training is not re-performed for the link 2. If the link information indicates that the link quality is poor, beam training is re-performed for link 2.

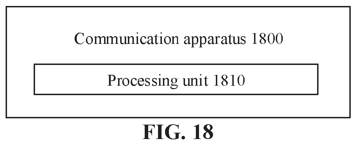

In the above description, embodiments of the method of the present application are described in detail with reference to FIGs.1 to 17. Hereinafter, embodiments of the device of the present application are described in detail with reference to FIGS. 18 to 20. It should be understood that the description of the method embodiment and the description of the device embodiment correspond to each other, and therefore, the portions not described in detail can be referred to the foregoing method embodiments.

Fig. 18 is a schematic diagram of a communication apparatus according to an embodiment of the present application. The communication apparatus 1800 shown in FIG. 18 may be AP MLD. The communication apparatus 1800 includes a processing unit 1810.

The processing unit 1810 is configured to manage second link(s) by using first link(s). A frequency band corresponding to the first link(s) is lower than a frequency band corresponding to the second link(s).

In one possible implementation, the processing unit is configured to manage activation and/or deactivation of the second link(s) by using the first link(s).

In one possible implementation, the processing unit is configured to receive a first frame on the first link(s) sent by a first non-access point multi-link device (non-AP MLD). The first frame is used to request to activate or deactivate the second link(s).

In one possible implementation, the first frame includes first indication information. The first indication information includes one or more of: indication information of activation or deactivation of the second link(s); identification information of the second link(s); indication information of an access mode of the second link(s); or indication information of whether to perform beam training for the second link(s).

In one possible implementation, the communication device further includes a first sending unit configured to send a response frame of the first frame to the first non-AP MLD on the first link(s), wherein the response frame of the first frame is used to indicate whether to agree to activate or deactivate the second link(s).

In a possible implementation, the response frame of the first frame includes second indication information. The second indication information is used to indicate one or more of: whether to agree to activate or deactivate the second link(s); whether to agree to perform beam training for the second link(s); identification information of the second link(s); or the access mode of the second link(s).

In one possible implementation, the first frame and the response frame of the first frame are both management frames. Or the first frame is a data frame, and the response frame of the first frame is a control frame. Or both the first frame and the response frame of the first frame are control frames.

In one possible implementation, the first frame is a link request frame, and a response frame of the first frame is a link response frame.

Or, the first frame is a data frame, and the response frame of the first frame is an acknowledgement frame. Or the first frame is a PS-POLL frame, and the response frame of the first frame is an acknowledgement frame.

In a possible implementation, the processing unit is configured to send a second frame on the first link(s). The second frame is used to manage activation and/or deactivation of second link(s) corresponding to one or more non-AP MLDs.

In a possible implementation, the second frame includes a first field that includes one or more of the following: indication information of activation or deactivation of second link(s) corresponding to each of the one or more non-AP MLDs; identification information of second link(s) corresponding to each of the one or more non-AP MLDs; identification information of one or more non-AP MLDs; indication information of an access mode of second link(s) corresponding to each non-AP MLD of the one or more non-AP MLDs; or indication information of whether to perform beam training for second link(s) corresponding to each of the one or more non-AP MLDs.

In a possible implementation, the communication device further includes a first receiving unit configured to receive a response frame of the second frame sent by a first non-AP MLD on the first link(s). The response frame of the second frame is used to indicate whether the first non-AP MLD agrees to activate or deactivate second link(s) corresponding to the first non-AP MLD, and the first non-AP MLD is any one of the one or more non-AP MLDs.

In a possible implementation, the response frame of the second frame includes third indication information. The third indication information is used to indicate one or more of: whether to agree to activate or deactivate the second link(s) corresponding to the first non-AP MLD; whether to agree to perform beam training for the second link(s) corresponding to the first non-AP MLD; identification information of second link(s) corresponding to the first non-AP MLD; or an access mode of the second link(s) corresponding to the first non-AP MLD.

In one possible implementation, the second frame and the response frame of the second frame are both management frames. Or the second frame is a data frame, and the response frame of the second frame is a control frame.

In one possible implementation, the second frame is a link request frame, and the response frame of the second frame is a link response frame; or the second frame is a data frame, and the response frame of the second frame is an acknowledgement frame; or the second frame is a beacon frame.

In one possible implementation, the activation of the second link(s) includes one or more of: changing a mode of the second link(s) from a sleep mode in an available mode to an active mode in an available mode; changing a mode of the second link(s) from an unavailable mode to an available mode; changing a mode of the second link(s) from an unavailable mode to a sleep mode in an available mode; or changing the mode of the second link(s) from an unavailable mode to an active mode in an available mode.

In one possible implementation, the deactivation of the second link(s) includes one or more of: changing a mode of the second link(s) from an mode state in an available mode to a sleep mode in an available mode; changing a mode of the second link(s) from an available mode to an unavailable mode; changing a mode of the second link(s) from an active mode in an available mode to an unavailable mode; or changing a mode of the second link(s) from a sleep mode in an available mode to an unavailable mode.

In one possible implementation, whether to perform beam training for the second link(s) is determined based on link quality of the second link(s).

In one possible implementation, if the second link(s) has a mapping relationship with at least one traffic stream, the at least one traffic stream has a mapping relationship with one or more first links.

In a possible implementation, the processing unit is configured to manage channel access of the second link(s) by using the first link(s).

In a possible implementation, the processing unit is configured to determine whether a channel of a frequency band corresponding to the second link(s) is idle in a frequency band corresponding to the first link(s).

In a possible implementation, the processing unit is configured to when the AP MLD successfully contends for a channel on the frequency band corresponding to the first link(s), and the frequency band corresponding to the second link(s) is idle for a period before the successful contention of the frequency band corresponding to the first link(s), determining, by the AP MLD, that the channel of the frequency band corresponding to the second link(s) is idle.

In a possible implementation, the communication device further includes: when the AP MLD determines that the channel of the frequency band corresponding to the second link(s) is idle, the second sending unit transmits on the first link(s) and the second link(s) cooperatively; and/or when the AP MLD determines that the channel of the frequency band corresponding to the second link(s) is busy, the second sending unit transmits on the first link.

In a possible implementation, the processing unit is configured to determine, by using first link(s), whether the first non-AP MLD supports communication in a frequency band corresponding to the second link(s).

In a possible implementation, the processing unit is configured to receive a third frame sent by the first non-AP MLD on the first link, wherein the third frame is used to indicate whether the first non-AP MLD supports communication in the frequency band corresponding to the second link(s).

In a possible implementation, the communication device further includes a third sending unit, configured to send a response frame of the third frame to the first non-AP MLD on the first link, wherein the response frame of the third frame is used to indicate whether the AP MLD supports communication in the frequency band corresponding to the second link(s).

In one possible implementation, the third frame is a probe request frame, and the response frame of the third frame is a probe response frame.

In a possible implementation, the processing unit is configured to send a fourth frame to one or more non-AP MLDs on the first link(s), and the fourth frame is configured to indicate whether the AP MLD supports communication in a frequency band corresponding to the second link(s); when the first non-AP MLD supports communication in the frequency band corresponding to the second link(s), the second receiving unit is configured to receive a fifth frame sent by the first non-AP MLD, wherein the fifth frame is used to request the AP MLD to transmit on the frequency band corresponding to the second link(s).

In one possible implementation, the fourth frame is broadcast by the AP MLD on the first link(s).

In one possible implementation, the fourth frame is a beacon frame.

In a possible implementation, a frequency band corresponding to the first link(s) belongs to a sub-7 GHz frequency band, and a frequency band corresponding to the second link(s) belongs to a millimeter wave frequency band.

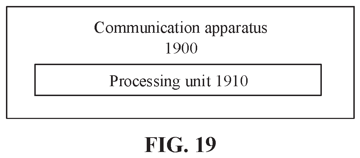

Fig. 19 is a schematic diagram of a communication apparatus according to an embodiment of the present application. The communication apparatus 1900 shown in FIG. 19 may be a first non-AP MLD, and the communication device 1900 includes a processing unit 1910.

The processing unit 1910 is configured to manage second link(s) by using first link(s). A frequency band corresponding to the first link(s) is lower than a frequency band corresponding to the second link(s).

In one possible implementation, the processing unit is configured to manage activation and/or deactivation of the second link(s) by using the first link(s).

In a possible implementation, the processing unit is configured to send a first frame on the first link(s) to an access point multi-link device (AP MLD), wherein the first frame is used to request to activate or deactivate the second link(s).

In one possible implementation, the first frame includes first indication information. The first indication information includes one or more of: indication information of activation or deactivation of the second link(s); identification information of the second link(s); indication information of an access mode of the second link(s); or indication information of whether to perform beam training for the second link(s).

In a possible implementation, the communication device further includes a first receiving unit receive a response frame of the first frame sent by the AP MLD on the first link(s). The response frame of the first frame is used to indicate whether to agree to activate or deactivate the second link(s).

In a possible implementation, the response frame of the first frame includes second indication information. The second indication information is used to indicate one or more of: whether to agree to activate or deactivate the second link(s); whether to agree to perform beam training for the second link(s); identification information of the second link(s); or the access mode of the second link(s).

In one possible implementation, the first frame and the response frame of the first frame are both management frames. Or the first frame is a data frame, and the response frame of the first frame is a control frame. Or both the first frame and the response frame of the first frame are control frames.

In one possible implementation, the first frame is a link request frame, and the response frame of the first frame is a link response frame; or the first frame is a data frame, and the response frame of the first frame is an acknowledgement frame; or the first frame is a PS-POLL frame, and the response frame of the first frame is an acknowledgement frame.

In a possible implementation, the processing unit is configured to receive a second frame sent by an AP MLD on the first link(s). The second frame is used to manage activation and/or deactivation of second link(s) corresponding to one or more non-AP MLDs.

In a possible implementation, the second frame includes a first field that includes one or more of the following: indication information of activation or deactivation of second link(s) corresponding to each of the one or more non-AP MLDs; identification information of second link(s) corresponding to each of the one or more non-AP MLDs; identification information of one or more non-AP MLDs; indication information of an access mode of second link(s) corresponding to each non-AP MLD of the one or more non-AP MLDs; or indication information of whether to perform beam training for second link(s) corresponding to each of the one or more non-AP MLDs.

In a possible implementation, the communication device further includes a first sending unit configured to send a response frame of the second frame to the AP MLD on the first link(s). The response frame of the second frame is used to indicate whether the first non-AP MLD agrees to activate or deactivate second link(s) corresponding to the first non-AP MLD, and the first non-AP MLD is any one of the one or more non-AP MLDs.

In a possible implementation, the response frame of the second frame includes third indication information. The third indication information is used to indicate one or more of: whether to agree to activate or deactivate the second link(s) corresponding to the first non-AP MLD; whether to agree to perform beam training for the second link(s) corresponding to the first non-AP MLD; identification information of second link(s) corresponding to the first non-AP MLD; or an access mode of the second link(s) corresponding to the first non-AP MLD.

In one possible implementation, the second frame and the response frame of the second frame are both management frames. Or the second frame is a data frame, and the response frame of the second frame is a control frame.

In one possible implementation, the second frame is a link request frame, and the response frame of the second frame is a link response frame;

or the second frame is a data frame, and the response frame of the second frame is an acknowledgement frame; or the second frame is a beacon frame.

In one possible implementation, the activation of the second link(s) includes one or more of: changing a mode of the second link(s) from a sleep mode in an available mode to an active mode in an available mode; changing a mode of the second link(s) from an unavailable mode to an available mode; changing a mode of the second link(s) from an unavailable mode to a sleep mode in an available mode; or changing the mode of the second link(s) from an unavailable mode to an active mode in an available mode.

In one possible implementation, the deactivation of the second link(s) includes one or more of: changing a mode of the second link(s) from an mode state in an available mode to a sleep mode in an available mode; changing a mode of the second link(s) from an available mode to an unavailable mode; changing a mode of the second link(s) from an active mode in an available mode to an unavailable mode; or changing a mode of the second link(s) from a sleep mode in an available mode to an unavailable mode.

In one possible implementation, whether to perform beam training for the second link(s) is determined based on link quality of the second link(s).

In one possible implementation, if the second link(s) has a mapping relationship with at least one traffic stream, the at least one traffic stream has a mapping relationship with one or more first links.

In a possible implementation, the processing unit is configured to manage channel access of the second link(s) by using the first link(s).

In a possible implementation, the processing unit is configured to determine whether a channel of a frequency band corresponding to the second link(s) is idle in a frequency band corresponding to the first link(s).

In a possible implementation, the processing unit is configured to when the first non-AP MLD successfully contends for a channel on the frequency band corresponding to the first link(s), and the frequency band corresponding to the second link(s) is idle for a period before the successful contention of the frequency band corresponding to the first link(s), determining, by the first non-AP MLD, that the channel of the frequency band corresponding to the second link(s) is idle.

In a possible implementation, the communication device further includes: when the first non-AP MLD determines that the channel of the frequency band corresponding to the second link(s) is idle, the second sending unit is configured to transmit on the first link(s) and the second link(s) cooperatively; and/or when the first non-AP MLD determines that the channel of the frequency band corresponding to the second link(s) is busy, the third sending unit is configured to transmit on the first link.

In a possible implementation, the processing unit is configured to determine, by using first link(s), whether the AP MLD supports communication in a frequency band corresponding to the second link(s).

In a possible implementation, the processing unit is configured to send a third frame to the AP MLD on the first link(s). The third frame is configured to indicate whether the first non-AP MLD supports communication in a frequency band corresponding to the second link(s). A second receiving unit is configured to receive a response frame of the third frame on the first link(s) sent by the AP MLD, wherein the response frame of the third frame is used to indicate whether the AP MLD supports communication in the frequency band corresponding to the second link(s).

In one possible implementation, the third frame is a probe request frame, and the response frame of the third frame is a probe response frame.

In a possible implementation, the processing unit is configured to receive a fourth frame sent by the AP MLD on the first link(s), wherein the fourth frame is used to indicate whether the AP MLD supports communication in a frequency band corresponding to the second link(s).

In one possible implementation, the fourth frame is broadcast by the AP MLD on the first link(s).

In one possible implementation, the fourth frame is a beacon frame.

In a possible implementation, a frequency band corresponding to the first link(s) belongs to a sub-7 GHz frequency band, and a frequency band corresponding to the second link(s) belongs to a millimeter wave frequency band.

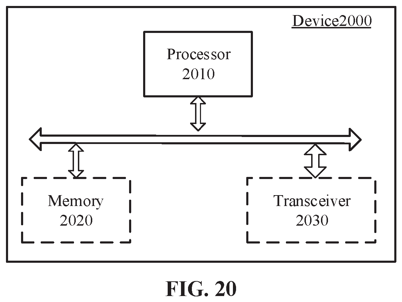

Fig. 20 is a schematic structure diagram of a communication device according to an embodiment of the present application. The dashed line in FIG. 20 indicates that the unit or module is optional. The device 2000 may be used to implement the method described in the method embodiments described above. The device 2000 may be a chip, a terminal device, or a network device.

The device 2000 may include one or more processors 2010. The processor 2010 may support the device 2000 to implement the methods described in the above method embodiments. The processor 2010 may be a general-purpose processor or a special-purpose processor. For example, the processor may be a central processing unit (CPU). The processor described above may be a general-purpose processor, a digital signal processor (DSP), an application specific integrated circuit (ASIC), an off-the-shelf field programmable gate array (FPGA) or other programmable logic device, a discrete gate or transistor logic device, or a discrete hardware component, The general purpose processor may be a microprocessor or the processor, or may be any conventional processor or the like.

The device 2000 may also include one or more memories 2020. A program is stored on the memory 2020, which can be executed by the processor 2010 so that the processor 2010 performs the method described in the above method embodiments. The memory 2020 may be a separate device independent of the processor 2010 or may be integrated in the processor 2010.

The device 2000 may also include a transceiver 2030. The processor 2010 may communicate with other devices or chips through the transceiver 2030. For example, the processor 2010 may send and receive data with other devices or chips through the transceiver 2030.

Embodiments of the present application also provide a computer-readable storage medium for storing a computer program. Optionally, the computer-readable storage medium may be applied to the network device or the terminal device according to the embodiment of the present application, and the computer-readable storage medium may cause a computer to implement methods implemented by the network device or the terminal device in the various embodiments of the present application.

Embodiments of the present application also provide a computer program product. The computer program product includes a program. Optionally, the computer program product may be applied to the network device or the terminal device according to the embodiment of the present application, and the computer program product may cause a computer to implement methods implemented by the network device or the terminal device in the various embodiments of the present application.

Embodiments of the present application also provide a computer program. Optionally, the computer program may be applied to the network device or the terminal device according to the embodiment of the present application, and the computer program may cause a computer to implement methods implemented by the network device or the terminal device in the various embodiments of the present application.

It should be understood that the terms "system" and "network" are often used interchangeably herein. In addition, the terms used in the present application is for explanation of specific embodiments of the present application only, and is not intended to limit the present application. The terms "first," "second," "third," and "fourth," etc. in the specification and claims of the present application and the accompanying drawings are used to distinguish different objects, and are not used to describe a specific order. Furthermore, the terms "comprising" and "having" and any variations thereof are intended to cover non-exclusive inclusions.

It should also be understood that the "indication" mentioned in the embodiments of the present application may be a direct indication, an indirect indication, or indicating having an associated relationship. For example, A indicates B, which may mean that A directly indicates B, for example, B can be acquired by A. It may also mean that A indicates B indirectly, for example, A indicates C, and B can be obtained through C. It may also mean that there is an association relationship between A and B.

In an embodiment of the present application, "B corresponding to A" means that B is associated with A, and B can be determined from A. However, it should also be understood that determining B according to A does not mean that B is determined according to A alone, and that B may also be determined according to A and/or other information.

The term "correspondence" mentioned in the embodiments of the present application may indicate that there is a direct correspondence or indirect correspondence between the two, may indicate that there is a correlation relationship between the two, or may indicate a relationship between indicating and being indicated, configuring and being configured, or the like.

The "predefined" or "pre-configured" mentioned in the embodiments of the present application may be implemented by storing corresponding codes, tables, or other manners that can be used to indicate relevant information in advance in devices (e.g., including terminal devices and network devices), and the present application does not limit specific implementations thereof. For example, predefined may refer to defined in the protocol.

In the embodiments of the present application, the "protocol" may refer to a standard protocol in the field of communication, and may include, for example, an LTE protocol, an NR protocol, and related protocols applied to future communication systems, and the present application does not limit this.

In the embodiments of the present application, the term "and/or" is only an association relationship describing associated objects, and means that there may be three relationships, for example, A and/or B, which may mean that A alone exists, A and B simultaneously exist, and B alone exists. In addition, the character "/" herein generally indicates that the related objects before and after this character are in an "or" relationship.

In the embodiments of the present application, the "comprising" may refer to directly including or indirectly including. Alternatively, the reference to "comprising" in the embodiments of the present application may be replaced with "indicating" or "used to determine". For example, A includes B, can be replaced with A to indicate B, or A is used to determine B.

In various embodiments of the present application, the size of the sequence number of the above-described processes does not mean the sequence of execution, and the sequence of execution of each process should be determined by its function and internal logic, and should not constitute any limitation on the implementation process of the embodiments of the present application.

In several embodiments provided herein, it should be understood that the disclosed systems, apparatuses, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate units may or may not be physically separate, and the units displayed as units may or may not be physical units, that is, they may be located in one place or may be distributed over a plurality of network units. Some or all of the units may be selected according to actual needs to achieve the purpose of the solution of the present embodiment.

In addition, each functional unit in each embodiment of the present application may be integrated in one processing unit, each unit may be physically present alone, or two or more units may be integrated in one unit.

In the embodiments described above, it may be implemented in whole or in part by software, hardware, firmware, or any combination thereof. When implemented using software, it may be implemented in whole or in part in the form of a computer program product. The computer program product includes one or more computer program instructions. When the computer program instructions are loaded and executed on a computer, the processes or functions described in accordance with embodiments of the present application are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server or data center by wired (e.g. coaxial cable, optical fiber, digital subscriber line (DSL)) or wireless (e.g. infrared, wireless, microwave, etc.) means to another website site, computer, server or data center. The computer-readable storage medium may be any available medium that can be read by a computer or a data storage device such as a server, a data center, or the like that includes one or more available media integrations. The available media may be magnetic media (e.g., floppy disk, hard disk, magnetic tape), optical media (e.g., digital video disc (DVD)), or semiconductor media (e.g., solid state disk (SSD)), etc.

The above is merely a specific embodiment of the present application, but the scope of protection of the present application is not limited thereto, and any change or substitution, within the technical scope disclosed in the present application, that can be easily thought of by the person skilled in the art should be covered within the scope of protection of the present application. Therefore, the scope of the present application should be subject to the scope of the claims.

## Claims

1. A method for radio communication, comprising:
managing, by an access point multi-link device (AP MLD), second link(s) by using first link(s), wherein a frequency band corresponding to the first link(s) is lower than a frequency band corresponding to the second link(s).

2. The method according to claim 1, wherein the managing, by an AP MLD, second link(s) by using first link(s) comprises:
managing, by the AP MLD, activation and/or deactivation of the second link(s) by using the first link(s).

3. The method according to claim 2, wherein the managing, by the AP MLD, activation and/or deactivation of the second link(s) by using the first link(s) comprises:
receiving, by the AP MLD, a first frame transmitted by a first non-access point multi-link device (non-AP MLD) on the first link(s), wherein the first frame is used to request to activate or deactivate the second link(s).

4. The method according to claim 3, wherein the first frame comprises first indication information, and the first indication information comprises one or more of following:
indication information of activation or deactivation of the second link(s);
identification information of the second link(s);
indication information of an access mode of the second link(s); or
indication information of whether to perform beam training for the second link(s).

5. The method according to claim 3 or 4, further comprising:
sending, by the AP MLD, a response frame of the first frame to the first non-AP MLD on the first link(s), wherein the response frame of the first frame is used to indicate whether to agree to activate or deactivate the second link(s).

6. The method according to claim 5, wherein the response frame of the first frame comprises second indication information, and the second indication information is used to indicate one or more of following:
whether to agree to activate or deactivate the second link(s);
whether to agree to perform beam training for the second link(s);
identification information of the second link(s); or
an access mode of the second link(s).

7. The method according to any one of claims 3 to 6, wherein
the first frame and the response frame of the first frame are both management frames; or
the first frame is a data frame, and the response frame of the first frame is a control frame; or
the first frame and the response frame of the first frame are both control frames.

8. The method according to claim 7, wherein
the first frame is a link request frame, and a response frame of the first frame is a link response frame; or
the first frame is a data frame, and the response frame of the first frame is an acknowledgement frame; or
the first frame is a power saving-polling (PS-POLL) frame, and the response frame of the first frame is an acknowledgement frame.

9. The method according to claim 2, wherein the managing, by the AP MLD, activation and/or deactivation of the second link(s) by using the first link(s) comprises:
sending, by the AP MLD, a second frame on the first link(s), wherein the second frame is used to manage activation and/or deactivation of second link(s) corresponding to one or more non-AP MLDs.

10. The method according to claim 9, wherein the second frame comprises a first field, and the first field comprises one or more of following:
indication information of activation or deactivation of second link(s) corresponding to each non-AP MLD of the one or more non-AP MLDs;
identification information of second link(s) corresponding to each non-AP MLD of the one or more non-AP MLDs;
identification information of the one or more non-AP MLDs;
indication information of an access mode of second link(s) corresponding to each of the one or more non-AP MLDs; or
indication information of whether to perform beam training for second link(s) corresponding to each of the one or more non-AP MLDs.

11. The method according to claim 9 or 10, further comprising:
receiving, by the AP MLD, a response frame of the second frame sent by a first non-AP MLD on the first link(s), wherein the response frame of the second frame is used to indicate whether the first non-AP MLD agrees to activate or deactivate second link(s) corresponding to the first non-AP MLD, and the first non-AP MLD is any one of the one or more non-AP MLDs.

12. The method according to claim 11, wherein the response frame of the second frame comprises third indication information, and the third indication information is used for indicating one or more of following:
whether to agree to activate or deactivate the second link(s) corresponding to the first non-AP MLD;
whether to agree to perform beam training for the second link(s) corresponding to the first non-AP MLD;
identification information of second link(s) corresponding to the first non-AP MLD; or
an access mode of second link(s) corresponding to the first non-AP MLD.

13. The method according to any one of claims 9 to 12, wherein
the second frame and the response frame of the second frame are both management frames; or
the second frame is a data frame, and the response frame of the second frame is a control frame.

14. The method according to claim 13, wherein,
the second frame is a link request frame, and the response frame of the second frame is a link response frame; or
the second frame is a data frame, and the response frame of the second frame is an acknowledgement frame; or
the second frame is a beacon frame.

15. The method according to any one of claims 2-14, wherein the activation of the second link(s) comprises one or more of following:
changing a mode of the second link(s) from a sleep mode in an available mode to an active mode in an available mode;
changing a mode of the second link(s) from an unavailable mode to an available mode;
changing a mode of the second link(s) from an unavailable mode to a sleep mode in an available mode; or
changing a mode of the second link(s) from an unavailable mode to an active mode in an available mode;
wherein the deactivation of the second link(s) comprises one or more of following:
changing a mode of the second link(s) from an active mode in an available mode to a sleep mode in an available mode;
changing a mode of the second link(s) from an available mode to an unavailable mode;
changing a mode of the second link(s) from an active mode in an available mode to an unavailable mode; or
changing a mode of the second link(s) from a sleep mode in an available mode to an unavailable mode.

16. The method according to any one of claims 2-15, wherein whether to perform beam training for the second link(s) is determined based on link quality of the second link(s).

17. The method according to any one of claims 2-16, wherein if the second link(s) has a mapping relationship with at least one traffic stream, the at least one traffic stream has a mapping relationship with one or more first links.

18. The method according to any one of claims 1-17, wherein the managing, by an AP MLD, second link(s) by using first link(s) comprises:
managing, by the AP MLD, channel access of the second link(s) by using the first link(s).

19. The method according to claim 18, wherein the managing, by the AP MLD, channel access of the second link(s) by using the first link(s) comprises:
determining, by the AP MLD, whether a channel of a frequency band corresponding to the second link(s) is idle in a frequency band corresponding to the first link(s).

20. The method according to claim 19, wherein the determining, by the AP MLD, whether a channel of a frequency band corresponding to the second link(s) is idle in a frequency band corresponding to the first link(s) comprises:
when the AP MLD successfully contends for a channel on the frequency band corresponding to the first link(s), and the frequency band corresponding to the second link(s) is idle for a period before the successful contention of the frequency band corresponding to the first link(s), determining, by the AP MLD, that the channel of the frequency band corresponding to the second link(s) is idle.

21. The method according to claim 19 or 20, further comprising:
when the AP MLD determines that the channel of the frequency band corresponding to the second link(s) is idle, transmitting, by the AP MLD, on the first link(s) and the second link(s) cooperatively; and/or
when the AP MLD determines that the channel of the frequency band corresponding to the second link(s) is busy, transmitting, by the AP MLD, on the first link(s).

22. The method according to any one of claims 1-21, wherein the managing, by an AP MLD, second link(s) by using first link(s) comprises:
determining, by the AP MLD using the first link(s), whether the first non-AP MLD supports communication in a frequency band corresponding to the second link(s).

23. The method according to claim 22, wherein the determining, by the AP MLD using the first link(s), whether the first non-AP MLD supports communication in a frequency band corresponding to the second link(s) comprises:
receiving, by the AP MLD, a third frame sent by the first non-AP MLD on the first link(s), wherein the third frame is used to indicate whether the first non-AP MLD supports communication in the frequency band corresponding to the second link(s).

24. The method according to claim 23, further comprising:
sending, by the AP MLD, a response frame of the third frame to the first non-AP MLD on the first link, wherein the response frame of the third frame is used to indicate whether the AP MLD supports communication in the frequency band corresponding to the second link(s).

25. The method according to claim 23 or 24, wherein the third frame is a probe request frame, and the response frame of the third frame is a probe response frame.

26. The method according to claim 22, wherein the determining, by the AP MLD using the first link(s), whether the first non-AP MLD supports communication in a frequency band corresponding to the second link(s) comprises:
transmitting, by the AP MLD, a fourth frame to one or more non-AP MLDs on the first link(s), wherein the fourth frame is used to indicate whether the AP MLD supports communication in the frequency band corresponding to the second link(s); and
when the first non-AP MLD supports communication in the frequency band corresponding to the second link(s), receiving, by the AP MLD, a fifth frame sent by the first non-AP MLD, wherein the fifth frame is used to request the AP MLD to transmit on the frequency band corresponding to the second link(s).

27. The method according to claim 26, wherein the fourth frame is broadcast by the AP MLD on the first link(s).

28. The method according to claim 26 or 27, wherein the fourth frame is a beacon frame.

29. The method according to any one of claims 1-28, wherein a frequency band corresponding to the first link(s) belongs to a sub-7 GHz frequency band, and a frequency band corresponding to the second link(s) belongs to a millimeter wave frequency band.

30. A method for radio communication, comprising:
managing, by a first non-access point multi-link device (non-AP MLD) second link(s) by using first link(s), wherein a frequency band corresponding to the first link(s) is lower than a frequency band corresponding to the second link(s).

31. The method according to claim 30, wherein the managing, by a first non-access point multi-link device (non-AP MLD) second link(s) by using first link(s) comprises:
managing, by the non-AP MLD, activation and/or deactivation of the second link(s) by using the first link(s).

32. The method according to claim 31, wherein the managing, by the non-AP MLD, activation and/or deactivation of the second link(s) by using the first link(s) comprises:
sending, by the non-AP MLD, a first frame to an access point multi-link device (AP MLD) on the first link(s), wherein the first frame is used to request to activate or deactivate the second link(s).

33. The method according to claim 32, wherein the first frame comprises first indication information, and the first indication information comprises one or more of following:
indication information of activation or deactivation of the second link(s);
identification information of the second link(s);
indication information of an access mode of the second link(s); or
indication information of whether to perform beam training for the second link(s).

34. The method according to claim 32 or 33, further comprising:
receiving, by the first non-AP MLD, a response frame of the first frame sent by the AP MLD on the first link(s), wherein the response frame of the first frame is used to indicate whether to agree to activate or deactivate the second link(s).

35. The method according to claim 34, wherein the response frame of the first frame comprises second indication information, and the second indication information is used to indicate one or more of following:
whether to agree to activate or deactivate the second link(s);
whether to agree to perform beam training for the second link(s);
identification information of the second link(s); or
an access mode of the second link(s).

36. The method according to any one of claims 32 to 35, wherein
the first frame and the response frame of the first frame are both management frames; or
the first frame is a data frame, and the response frame of the first frame is a control frame; or
the first frame and the response frame of the first frame are both control frames.

37. The method according to claim 36, wherein,
the first frame is a link request frame, and a response frame of the first frame is a link response frame; or
the first frame is a data frame, and the response frame of the first frame is an acknowledgement frame; or
the first frame is a PS-POLL frame, and the response frame of the first frame is an acknowledgement frame.

38. The method according to claim 31, wherein the managing, by the non-AP MLD, activation and/or deactivation of the second link(s) by using the first link(s) comprises:
receiving, by the first non-AP MLD, a second frame sent by an AP MLD on the first link(s), wherein the second frame is used to manage activation and/or deactivation of second link(s) corresponding to one or more non-AP MLDs.

39. The method according to claim 38, wherein the second frame comprises a first field, and the first field comprises one or more of following:
indication information of activation or deactivation of second link(s) corresponding to each non-AP MLD of the one or more non-AP MLDs;
identification information of second link(s) corresponding to each non-AP MLD of the one or more non-AP MLDs;
identification information of the one or more non-AP MLDs;
indication information of an access mode of second link(s) corresponding to each of the one or more non-AP MLDs; or
indication information of whether to perform beam training for second link(s) corresponding to each of the one or more non-AP MLDs.

40. The method according to claim 38 or 39, further comprising:
sending, by the first non-AP MLD, a response frame of the second frame to the AP MLD on the first link(s), wherein the response frame of the second frame is used to indicate whether the first non-AP MLD agrees to activate or deactivate second link(s) corresponding to the first non-AP MLD, and the first non-AP MLD is any one of the one or more non-AP MLDs.

41. The method according to claim 40, wherein the response frame of the second frame comprises third indication information, and the third indication information is used for indicating one or more of following:
whether to agree to activate or deactivate the second link(s) corresponding to the first non-AP MLD;
whether to agree to perform beam training for the second link(s) corresponding to the first non-AP MLD;
identification information of second link(s) corresponding to the first non-AP MLD; or
an access mode of second link(s) corresponding to the first non-AP MLD.

42. The method according to any one of claims 38 to 41, wherein
the second frame and the response frame of the second frame are both management frames; or
the second frame is a data frame, and the response frame of the second frame is a control frame.

43. The method according to claim 42, wherein,
the second frame is a link request frame, and the response frame of the second frame is a link response frame; or
the second frame is a data frame, and the response frame of the second frame is an acknowledgement frame; or
the second frame is a beacon frame.

44. The method according to any one of claims 31-43, wherein the activation of the second link(s) comprises one or more of following:
changing a mode of the second link(s) from a sleep mode in an available mode to an active mode in an available mode;
changing a mode of the second link(s) from an unavailable mode to an available mode;
changing a mode of the second link(s) from an unavailable mode to a sleep mode in an available mode; or
changing a mode of the second link(s) from an unavailable mode to an active mode in an available mode;
wherein the deactivation of the second link(s) comprises one or more of following:
changing a mode of the second link(s) from an active mode in an available mode to a sleep mode in an available mode;
changing a mode of the second link(s) from an available mode to an unavailable mode;
changing a mode of the second link(s) from an active mode in an available mode to an unavailable mode; or
changing a mode of the second link(s) from a sleep mode in an available mode to an unavailable mode.

45. The method according to any one of claims 31-44, wherein whether to perform beam training for the second link(s) is determined based on link quality of the second link(s).

46. The method according to any one of claims 31-45, wherein if the second link(s) has a mapping relationship with at least one traffic stream, the at least one traffic stream has a mapping relationship with one or more first links.

47. The method according to any one of claims 30-46, wherein the managing, by a non-AP MLD, second link(s) by using first link(s) comprises:
managing, by the first non-AP MLD, channel access of the second link(s) by using the first link(s).

48. The method according to claim 47, wherein the managing, by the first non-AP MLD, channel access of the second link(s) by using the first link(s) comprises:
determining, by the first non-AP MLD, whether a channel of a frequency band corresponding to the second link(s) is idle in a frequency band corresponding to the first link(s).

49. The method according to claim 48, wherein the determining, by the first non-AP MLD, whether a channel of a frequency band corresponding to the second link(s) is idle in a frequency band corresponding to the first link(s) comprises:
when the first non-AP MLD successfully contends for a channel on the frequency band corresponding to the first link(s), and the frequency band corresponding to the second link(s) is idle for a period before the successful contention of the frequency band corresponding to the first link(s), determining, by the first non-AP MLD, that the channel of the frequency band corresponding to the second link(s) is idle.

50. The method according to claim 48 or 49, further comprising:
when the first non-AP MLD determines that the channel of the frequency band corresponding to the second link(s) is idle, transmitting, by the first non-AP MLD, on the first link(s) and the second link(s) cooperatively; and/or
when the first non-AP MLD determines that the channel of the frequency band corresponding to the second link(s) is busy, transmitting, by the first non-AP MLD, on the first link(s).

51. The method according to any one of claims 30-50, wherein the managing, by a non-AP MLD, second link(s) by using first link(s) comprises:
determining, by the first non-AP MLD using the first link(s), whether the first AP MLD supports communication in a frequency band corresponding to the second link(s).

52. The method according to claim 51, wherein the determining, by the first non-AP MLD using the first link(s), whether the first AP MLD supports communication in a frequency band corresponding to the second link(s) comprises:
sending, by the first non-AP MLD, a third frame to the AP MLD on the first link(s), wherein the third frame is used to indicate whether the first non-AP MLD supports communication in the frequency band corresponding to the second link(s); and
receiving, by the first non-AP MLD, a response frame of the third frame on the first link(s) sent by the AP MLD, wherein the response frame of the third frame is used to indicate whether the AP MLD supports communication in the frequency band corresponding to the second link(s).

53. The method according to claim 52, wherein the third frame is a probe request frame, and the response frame of the third frame is a probe response frame.

54. The method according to claim 51, wherein the determining, by the first non-AP MLD using the first link(s), whether the first AP MLD supports communication in a frequency band corresponding to the second link(s) comprises:
receiving, by the first non-AP MLD, a fourth frame sent by the AP MLD on the first link(s), wherein the fourth frame is used to indicate whether the AP MLD supports communication in a frequency band corresponding to the second link(s).

55. The method according to claim 54, wherein the fourth frame is broadcast by the AP MLD on the first link(s).

56. The method according to claim 54 or 55, wherein the fourth frame is a beacon frame.

57. The method according to any one of claims 30-56, wherein a frequency band corresponding to the first link(s) belongs to a sub-7 GHz frequency band, and a frequency band corresponding to the second link(s) belongs to a millimeter wave frequency band.

58. A communication apparatus, wherein the communication apparatus is an access point multi-link device (AP MLD), and the communication apparatus comprises:
a processing unit, configured to manage second link(s) by using first link(s), wherein a frequency band corresponding to the first link(s) is lower than a frequency band corresponding to the second link(s).

59. The communication apparatus according to claim 58, wherein the processing unit is configured to:
manage activation and/or deactivation of the second link(s) by using the first link(s).

60. The communication apparatus according to claim 59, wherein the processing unit is configured to:
receive a first frame on the first link(s) sent by a first non-access point multi-link device (non-AP MLD), wherein the first frame is used to request to activate or deactivate the second link(s).

61. The communication apparatus according to claim 60, wherein the first frame comprises first indication information, and the first indication information comprises one or more of following:
indication information of activation or deactivation of the second link(s);
identification information of the second link(s);
indication information of an access mode of the second link(s); or
indication information of whether to perform beam training for the second link(s).

62. The communication apparatus according to claim 60 or 61, further comprising:
a first sending unit, configured to send a response frame of the first frame to the first non-AP MLD on the first link(s), wherein the response frame of the first frame is used to indicate whether to agree to activate or deactivate the second link(s).

63. The communication apparatus of claim 62, wherein the response frame of the first frame comprises second indication information , and the second indication information is used to indicate one or more of following:
whether to agree to activate or deactivate the second link(s);
whether to agree to perform beam training for the second link(s);
identification information of the second link(s); or
an access mode of the second link(s).

64. The communication apparatus according to any one of claims 60 to 63, wherein,
the first frame and the response frame of the first frame are both management frames; or
the first frame is a data frame, and the response frame of the first frame is a control frame; or
the first frame and the response frame of the first frame are both control frames.

65. The communication apparatus according to claim 64, wherein,
the first frame is a link request frame, and a response frame of the first frame is a link response frame; or
the first frame is a data frame, and the response frame of the first frame is an acknowledgement frame; or
the first frame is a PS-POLL frame, and the response frame of the first frame is an acknowledgement frame.

66. The communication apparatus according to claim 59, wherein the processing unit is configured to:
send a second frame on the first link(s), wherein the second frame is used to manage activation and/or deactivation of second link(s) corresponding to one or more non-AP MLDs.

67. The communication apparatus according to claim 66, wherein the second frame comprises a first field, and the first field comprises one or more of following:
indication information of activation or deactivation of second link(s) corresponding to each non-AP MLD of the one or more non-AP MLDs;
identification information of second link(s) corresponding to each non-AP MLD of the one or more non-AP MLDs;
identification information of the one or more non-AP MLDs;
indication information of an access mode of second link(s) corresponding to each of the one or more non-AP MLDs; or
indication information of whether to perform beam training for second link(s) corresponding to each of the one or more non-AP MLDs.

68. The communication apparatus according to claim 66 or 67, further comprising:
a first receiving unit, configured to receive a response frame of the second frame sent by a first non-AP MLD on the first link(s), wherein the response frame of the second frame is used to indicate whether the first non-AP MLD agrees to activate or deactivate second link(s) corresponding to the first non-AP MLD, and the first non-AP MLD is any one of the one or more non-AP MLDs.

69. The communication apparatus according to claim 68, wherein the response frame of the second frame includes third indication information, and the third indication information is used for indicating one or more of following:
whether to agree to activate or deactivate the second link(s) corresponding to the first non-AP MLD;
whether to agree to perform beam training for the second link(s) corresponding to the first non-AP MLD;
identification information of second link(s) corresponding to the first non-AP MLD; or
an access mode of second link(s) corresponding to the first non-AP MLD.

70. The communication apparatus according to any one of claims 66 to 69, wherein,
the second frame and the response frame of the second frame are both management frames; or
the second frame is a data frame, and the response frame of the second frame is a control frame.

71. The communication apparatus according to claim 70, wherein,
the second frame is a link request frame, and the response frame of the second frame is a link response frame; or
the second frame is a data frame, and the response frame of the second frame is an acknowledgement frame; or
the second frame is a beacon frame.

72. The communication apparatus according to any one of claim 59-71, wherein the activation of the second link(s) comprises one or more of following:
changing a mode of the second link(s) from a sleep mode in an available mode to an active mode in an available mode;
changing a mode of the second link(s) from an unavailable mode to an available mode;
changing a mode of the second link(s) from an unavailable mode to a sleep mode in an available mode; or
changing a mode of the second link(s) from an unavailable mode to an active mode in an available mode;
wherein the deactivation of the second link(s) comprises one or more of following:
changing a mode of the second link(s) from an active mode in an available mode to a sleep mode in an available mode;
changing a mode of the second link(s) from an available mode to an unavailable mode;
changing a mode of the second link(s) from an active mode in an available mode to an unavailable mode; or
changing a mode of the second link(s) from a sleep mode in an available mode to an unavailable mode.

73. The communication apparatus according to any one of claim 59-72, wherein whether to perform beam training for the second link(s) is determined based on link quality of the second link(s).

74. The communication apparatus of any one of claims 59-73, wherein if the second link(s) has a mapping relationship with at least one traffic stream, the at least one traffic stream has a mapping relationship with one or more first links.

75. The communication apparatus according to claim 58- 74, wherein the processing unit is configured to manage channel access of the second link(s) by using the first link(s).

76. The communication apparatus according to claim 75, wherein the processing unit is configured to determine whether a channel of a frequency band corresponding to the second link(s) is idle in a frequency band corresponding to the first link(s).

77. The communication apparatus according to claim 76, wherein the processing unit is configured to: when the AP MLD successfully contends for a channel on the frequency band corresponding to the first link(s), and the frequency band corresponding to the second link(s) is idle for a period before the successful contention of the frequency band corresponding to the first link(s), determine, by the AP MLD, that the channel of the frequency band corresponding to the second link(s) is idle.

78. The communication apparatus according to claim 76 or 77, further comprising:
when the AP MLD determines that the channel of the frequency band corresponding to the second link(s) is idle, transmitting, by the second sending unit, on the first link(s) and the second link(s) cooperatively; and/or
when the AP MLD determines that the channel of the frequency band corresponding to the second link(s) is busy, transmitting, by the second sending unit, on the first link(s).

79. The communication apparatus according to any one of claims 58-78, wherein the processing unit is configured to determine, by using first link(s), whether the first non-AP MLD supports communication in a frequency band corresponding to the second link(s).

80. The communication apparatus according to claim 79, wherein the processing unit is configured to receive a third frame sent by the first non-AP MLD on the first link, wherein the third frame is used to indicate whether the first non-AP MLD supports communication in the frequency band corresponding to the second link(s).

81. The communication apparatus according to claim 80, further comprising:
a third sending unit, configured to send a response frame of the third frame to the first non-AP MLD on the first link, wherein the response frame of the third frame is used to indicate whether the AP MLD supports communication in the frequency band corresponding to the second link(s).

82. The communication apparatus according to claim 80 or 81, wherein the third frame is a probe request frame, and the response frame of the third frame is a probe response frame.

83. The communication apparatus of claim 79, wherein the processing unit is configured to send a fourth frame to one or more non-AP MLDs on the first link(s), wherein the fourth frame is used to indicate whether the AP MLD supports communication in the frequency band corresponding to the second link(s);
when the first non-AP MLD supports communication in the frequency band corresponding to the second link(s), the second receiving unit is configured to receive a fifth frame sent by the first non-AP MLD, wherein the fifth frame is used to request the AP MLD to transmit on the frequency band corresponding to the second link(s).

84. The communication apparatus according to claim 83, wherein the fourth frame is broadcast by the AP MLD on the first link(s).

85. The communication apparatus according to claim 83 or 84, wherein the fourth frame is a beacon frame.

86. The communication apparatus according to any one of claims 58-85, wherein a frequency band corresponding to the first link(s) belongs to a sub-7 GHz frequency band, and a frequency band corresponding to the second link(s) belongs to a millimeter wave frequency band.

87. A communication apparatus, wherein the communication apparatus is a first non-access point multi-link device (non-AP MLD), and the communication apparatus comprises:
a processing unit, configured to manage second link(s) by using first link(s), wherein a frequency band corresponding to the first link(s) is lower than a frequency band corresponding to the second link(s).

88. The communication apparatus according to claim 87, wherein the processing unit is configured to manage activation and/or deactivation of the second link(s) by using the first link(s).

89. The communication apparatus according to claim 88, wherein the processing unit is configured to send a first frame on the first link(s) to an access point multi-link device (AP MLD), wherein the first frame is used to request to activate or deactivate the second link(s).

90. The communication apparatus according to claim 89, wherein the first frame comprises first indication information, and the first indication information comprises one or more of following:
indication information of activation or deactivation of the second link(s);
identification information of the second link(s);
indication information of an access mode of the second link(s); or
indication information of whether to perform beam training for the second link(s).

91. The communication apparatus according to claim 89 or 90, further comprising:
a first receiving unit, configured to receive a response frame of the first frame sent by the AP MLD on the first link(s), wherein the response frame of the first frame is used to indicate whether to agree to activate or deactivate the second link(s).

92. The communication apparatus of claim 91, wherein the response frame of the first frame comprises second indication information, and the second indication information is used to indicate one or more of following:
whether to agree to activate or deactivate the second link(s);
whether to agree to perform beam training for the second link(s);
identification information of the second link(s); or
an access mode of the second link(s).

93. The communication apparatus according to any one of claims 89 to 92, wherein,
the first frame and the response frame of the first frame are both management frames; or
the first frame is a data frame, and the response frame of the first frame is a control frame; or
the first frame and the response frame of the first frame are both control frames.

94. The communication apparatus according to claim 93, wherein,
the first frame is a link request frame, and a response frame of the first frame is a link response frame; or
the first frame is a data frame, and the response frame of the first frame is an acknowledgement frame; or
the first frame is a PS-POLL frame, and the response frame of the first frame is an acknowledgement frame.

95. The communication apparatus according to claim 88, wherein the processing unit is configured to receive a second frame sent by an AP MLD on the first link(s), wherein the second frame is used to manage activation and/or deactivation of second link(s) corresponding to one or more non-AP MLDs.

96. The communication apparatus according to claim 95, wherein the second frame comprises a first field, and the first field comprises one or more of following:
indication information of activation or deactivation of second link(s) corresponding to each non-AP MLD of the one or more non-AP MLDs;
identification information of second link(s) corresponding to each non-AP MLD of the one or more non-AP MLDs;
identification information of the one or more non-AP MLDs;
indication information of an access mode of second link(s) corresponding to each of the one or more non-AP MLDs; or
indication information of whether to perform beam training for second link(s) corresponding to each of the one or more non-AP MLDs.

97. The communication apparatus according to claim 95 or 96, further comprising:
a first sending unit, configured to send a response frame of the second frame to the AP MLD on the first link(s), wherein the response frame of the second frame is used to indicate whether the first non-AP MLD agrees to activate or deactivate second link(s) corresponding to the first non-AP MLD, and the first non-AP MLD is any one of the one or more non-AP MLDs.

98. The communication apparatus according to claim 97, wherein the response frame of the second frame includes third indication information, and the third indication information is used for indicating one or more of following:
whether to agree to activate or deactivate the second link(s) corresponding to the first non-AP MLD;
whether to agree to perform beam training for the second link(s) corresponding to the first non-AP MLD;
identification information of second link(s) corresponding to the first non-AP MLD; or
an access mode of second link(s) corresponding to the first non-AP MLD.

99. The communication apparatus according to any one of claims 95 to 98, wherein,
the second frame and the response frame of the second frame are both management frames; or
the second frame is a data frame, and the response frame of the second frame is a control frame.

100. The communication apparatus according to claim 99, wherein,
the second frame is a link request frame, and the response frame of the second frame is a link response frame; or
the second frame is a data frame, and the response frame of the second frame is an acknowledgement frame; or
the second frame is a beacon frame.

101. The communication apparatus according to any one of claim 88-100, wherein the activation of the second link(s) comprises one or more of following:
changing a mode of the second link(s) from a sleep mode in an available mode to an active mode in an available mode;
changing a mode of the second link(s) from an unavailable mode to an available mode;
changing a mode of the second link(s) from an unavailable mode to a sleep mode in an available mode; or
changing a mode of the second link(s) from an unavailable mode to an active mode in an available mode;
wherein the deactivation of the second link(s) comprises one or more of following:
changing a mode of the second link(s) from an active mode in an available mode to a sleep mode in an available mode;
changing a mode of the second link(s) from an available mode to an unavailable mode;
changing a mode of the second link(s) from an active mode in an available mode to an unavailable mode; or
changing a mode of the second link(s) from a sleep mode in an available mode to an unavailable mode.

102. The communication apparatus according to any one of claim 88-101, wherein whether to perform beam training for the second link(s) is determined based on link quality of the second link(s).

103. The communication apparatus of any one of claims 88-102, wherein if the second link(s) has a mapping relationship with at least one traffic stream, the at least one traffic stream has a mapping relationship with one or more first links.

104. The communication apparatus according to claim 87- 103, wherein the processing unit is configured to manage channel access of the second link(s) by using the first link(s).

105. The communication apparatus according to claim 104, wherein the processing unit is configured to determine whether a channel of a frequency band corresponding to the second link(s) is idle in a frequency band corresponding to the first link(s).

106. The communication apparatus according to claim 105, wherein the processing unit is configured to: when the first non-AP MLD successfully contends for a channel on the frequency band corresponding to the first link(s), and the frequency band corresponding to the second link(s) is idle for a period before the successful contention of the frequency band corresponding to the first link(s), determine, by the first non-AP MLD, that the channel of the frequency band corresponding to the second link(s) is idle.

107. The communication apparatus according to claim 105 or 106, further comprising:
when the first non-AP MLD determines that the channel of the frequency band corresponding to the second link(s) is idle, a second sending unit is configured to transmit on the first link(s) and the second link(s) cooperatively; and/or
when the first non-AP MLD determines that the channel of the frequency band corresponding to the second link(s) is busy, a third sending unit is configured to transmit on the first link(s).

108. The communication apparatus according to any one of claims 87-107, wherein the processing unit is configured to determine, by using first link(s), whether the AP MLD supports communication in a frequency band corresponding to the second link(s).

109. The communication apparatus according to claim 108, wherein the processing unit is configured to send a third frame to the AP MLD on the first link(s), wherein the third frame is used to indicate whether the first non-AP MLD supports communication in the frequency band corresponding to the second link(s); and
a second receiving unit is configured to receive a response frame of the third frame on the first link(s) sent by the AP MLD, wherein the response frame of the third frame is used to indicate whether the AP MLD supports communication in the frequency band corresponding to the second link(s).

110. The communication apparatus according to claim 109, wherein the third frame is a probe request frame, and the response frame of the third frame is a probe response frame.

111. The communication apparatus according to claim 108, wherein the processing unit is configured to receive a fourth frame sent by the AP MLD on the first link(s), wherein the fourth frame is used to indicate whether the AP MLD supports communication in a frequency band corresponding to the second link(s).

112. The communication apparatus according to claim 111, wherein the fourth frame is broadcast by the AP MLD on the first link(s).

113. The communication apparatus according to claim 111 or 112, wherein the fourth frame is a beacon frame.

114. The communication apparatus according to any one of claims 87-113, wherein a frequency band corresponding to the first link(s) belongs to a sub-7 GHz frequency band, and a frequency band corresponding to the second link(s) belongs to a millimeter wave frequency band.

115. A communication device, comprising a processor and a memory, wherein the memory is configured to store a computer program and the processor is configured to invoke the computer program stored in the memory to cause the communication device to perform the method of any one of claims 1 to 57.

116. A device, comprising a processor for invoking a computer program from a memory to cause the device to perform the method of any of claims 1 to 57.

117. A chip, comprising a processor for invoking a computer program from a memory to cause a device on which the chip is mounted to perform the method of any of claims 1 to 57.

118. A computer-readable storage medium, configured to store a computer program, wherein the computer program causes a computer to perform the method of any one of claims 1 to 57.

119. A computer program, wherein the computer program causes a computer to perform the method of any one of claims 1 to 57.

120. A computer program, wherein the computer program causes a computer to perform the method of any one of claims 1 to 57.
